# EUROPEAN PATENT SPECIFICATION

(11) **EP 1 185 073 B1**
(45) Date of publication and mention of the grant of the patent: **14.04.2010**
(21) Application number: 01306714.5
(22) Date of filing: 06.08.2001
(51) Int. Cl.: H04N 1/00

(54) **Image printing apparatus**
Bilddruckgerät
Appareil d'impression d'images

(30) Priority: 07.08.2000 JP 2000238633
(43) Date of publication of application: 06.03.2002
(73) Proprietor: DAI NIPPON PRINTING CO., LTD., Tokyo 162-8001 (JP)
(72) Inventor: Ohkubo, Takayuki, c/o Dai Nippon Printing Co.,Ltd., Tokyo-to 162-8001 (JP); Ando, Jitsuhiko, c/o Dai Nippon Printing Co., Ltd., Tokyo-to 162-8001 (JP); Shibasaki, Naoji, c/o Dai Nippon Printing Co., Ltd, Tokyo-to 162-8001 (JP)
(74) Representative: Needle, Jacqueline

(56) References cited:
- EP-A- 0 657 845
- EP-A- 0 878 956
- US-A- 5 235 681
- PATENT ABSTRACTS OF JAPAN vol. 016, no. 580 (P-1461), 18 December 1992 (1992-12-18) & JP 04 227525 A (FUJI XEROX CO LTD), 17 August 1992 (1992-08-17)
- PATENT ABSTRACTS OF JAPAN vol. 2000, no. 10, 17 November 2000 (2000-11-17) & JP 2000 198249 A (SAMSUNG ELECTRONICS CO LTD), 18 July 2000 (2000-07-18)

## Description

The present invention relates to an image printing apparatus.

Conventionally, in order to print out an image taken by a digital camera or the like, similar to a silver photography film, in general, a user takes a recording medium with photographed images recorded to a laboratory for the printing process thereof. However, since it takes several days or more time, it cannot satisfy the user.

Moreover, since an image taken by a digital camera or the like can be recorded as digital data, it can be printed out by a personal computer and a printer at a house. JP-A-11-154218, corresponding to EP-A-0856972, describes methods of transmitting the digital image data taken by a digital camera or the like to a nearby laboratory by a personal computer via the Internet for printing at the laboratory. The printed article is then picked up or can be sent to the home by a delivery service.

It has been proposed to provide an image outputting apparatus, capable of reading and outputting image digital data, which is relatively compact so that it can be installed in a relatively small space in a shop or on the street. Such a "post type image outputting apparatus" is described, for example, in JP-A-10-341303 and has various kinds of interfaces capable of reading and outputting image digital data from different kinds of recording media. The post type image output apparatus can be operated freely by customers so that they can print out desired photographic images instantaneously.
JP-A-04227525 describes an image printing apparatus comprising:
image data inputting means for inputting image data;
a command inputting device for inputting a printing command including designation of an image to be output;
printing means for printing the image to be output; and
a display device for displaying an image.

Where an image printing out apparatus installed in a shop or on the street shows the image to be printed on a display, the image data may be easily visible to people around. The user may not feel comfortable to have images to be printed seen by other people.

The present invention seeks to address this problem by the image printing apparatus of claim 1 and embodiments thereof according to dependent claims 2-5.

Embodiments of the present invention will hereinafter be described, by way of example, with reference to the accompanying drawings, in which:
FIG. 1 is an explanation chart showing the outline of an image printing apparatus of the invention;
FIG. 2 is a perspective view showing an embodiment of a main body to be used in an image printing apparatus of the invention;
FIG. 3 is a block diagram showing an embodiment of an image printing apparatus of the invention;
FIG. 4 is a flow chart showing a procedure of a digital photo in an embodiment of an image printing apparatus.
FIG. 5 is a flow chart showing an image display process including a privacy protection process in an embodiment of an image printing means according to the present invention.
FIG. 6 is an example of a display screen at the time of the privacy protection process.
FIG. 7 is a graph showing a darkening process and a contrast lowering process of an image.
FIG. 8 is a flow chart showing a procedure of the frame synthesis and seal printing in an embodiment of an image printing apparatus according to the present invention.
FIG. 9 is a flow chart showing a procedure of the index printing in an embodiment of an image printing apparatus according to the present invention.
FIG. 10 is a flow chart showing a procedure of the certification photograph in an embodiment of an image printing apparatus according to the present invention.
FIG. 11 is a flow chart showing a procedure of the postcard printing in an embodiment of an image printing apparatus according to the present invention.
FIG. 12 is a start screen in an embodiment of an image printing apparatus according to the present invention.
FIG. 13 is a main menu screen in an embodiment of an image printing apparatus according to the present invention.
FIG. 14 is an operation screen for selecting the reading source of the image data in an embodiment of an image printing apparatus according to the present invention.
FIG. 15 is a guidance screen for a smart medium inserting method in an embodiment of an image printing apparatus according to the present invention.
FIG. 16 is a guidance screen for a compact flash cart inserting method in an embodiment of an image printing apparatus according to the present invention.
FIG. 17 is a guidance screen for a flexible disc inserting method in an embodiment of an image printing apparatus according to the present invention.
FIG. 18 is a guidance screen for a PC cart inserting method in an embodiment of an image printing apparatus according to the present invention.
FIG. 19 is a guidance screen for a CD-ROM inserting method in an embodiment of an image printing apparatus according to the present invention.
FIG. 20 is a thumb nail image display screen for showing the images read out for a digital photo in an embodiment of an image printing apparatus according to the present invention.
FIG. 21 is an operation screen for selecting a scanner reading size in an embodiment of an image printing apparatus according to the present invention.
FIG. 22 is an operation screen for guiding a scanner manuscript setting method in an embodiment of an image printing apparatus according to the present invention.
FIG. 23 is a display screen of an image read out by a scanner for a digital photo in an embodiment of an image printing apparatus according to the present invention.
FIG. 24 is an operation screen for setting the number of printing an image read out by a scanner for a digital photo in an embodiment of an image printing apparatus according to the present invention.
FIG. 25 is a guidance screen for a fee payment to be displayed at the time of executing digital photo in an embodiment of an image printing apparatus according to the present invention.
FIG. 26 is a guidance screen for asking for the confirmation of the fee at the time of executing the digital photo in an embodiment of an image printing apparatus according to the present invention.
FIG. 27 is a guidance screen for a smart medium detaching method in an embodiment of an image printing apparatus according to the present invention.
FIG. 28 is a guidance screen for a compact flash card detaching method in an embodiment of an image printing apparatus according to the present invention.
FIG. 29 is a guidance screen for a flexible disc detaching method in an embodiment of an image printing apparatus according to the present invention.
FIG. 30 is a guidance screen for a PC card detaching method in an embodiment of an image printing apparatus according to the present invention.
FIG. 31 is a guidance screen for a CD-ROM detaching method in an embodiment of an image printing apparatus according to the present invention.
FIG. 32 is a guidance screen for a scanner manuscript detaching method in an embodiment of an image printing apparatus according to the present invention.
FIG. 33 is a guidance screen during execution of the instantaneous printing in an embodiment of an image printing apparatus according to the present invention.
FIG. 34 is an end screen in an embodiment of an image printing apparatus according to the present invention.
FIG. 35 is a thumb nail image display screen of a frame used for the frame synthesis and seal printing in an embodiment of an image printing apparatus according to the present invention.
FIG. 36 is an enlarged display screen of the selected frame in an embodiment of an image printing apparatus according to the present invention.
FIG. 37 is a thumb nail image display screen for showing the images read out for the frame synthesis and seal printing in an embodiment of an image printing apparatus according to the present invention.
FIG. 38 is an operation screen for adjusting a synthesis image of the frame synthesis and seal printing in an embodiment of an image printing apparatus according to the present invention.
FIG. 39 is an operation screen for selecting the image reading source for the index printing in an embodiment of an image printing apparatus according to the present invention.
FIG. 40 is a guidance screen for the confirmation of the printing image of the index printing in an embodiment of an image printing apparatus according to the present invention.
FIG. 41 is a guidance screen for the fee payment of the index printing in an embodiment of an image printing apparatus according to the present invention.
FIG. 42 is an operation screen for selecting the certification photograph printing type in an embodiment of an image printing apparatus according to the present invention.
FIG. 43 is a guidance screen for the fee payment of the certification photograph in an embodiment of an image printing apparatus according to the present invention.
FIG. 44 is a thumb nail image display screen for showing the images read out for the certification photograph in an embodiment of an image printing apparatus according to the present invention.
FIG. 45 is an operation screen for selecting the sub menu of the postcard printing in an embodiment of an image printing apparatus according to the present invention.
FIG. 46 is a guidance screen for the fee payment to be displayed at the time of executing the postcard data production of the postcard printing in an embodiment of an image printing apparatus according to the present invention.

### DESCRIPTION OF THE PREFERRED EMBODIMENTS

Hereinafter, the present invention will be explained in detail with reference to the embodiments shown in the figures. However, the present invention is not limited to the embodiments.

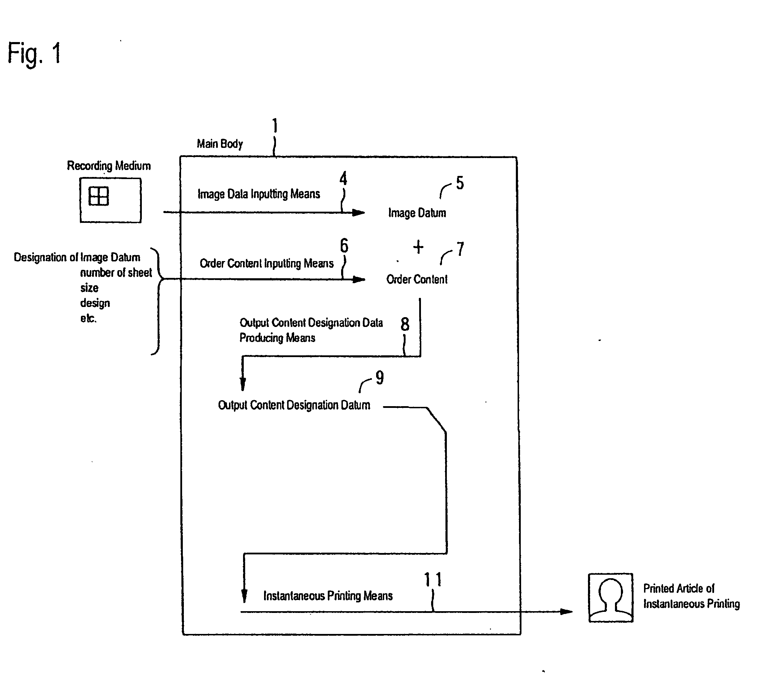

First, the outline of the present invention will be explained with reference to FIG. 1. An image printing apparatus according to the present invention comprises a stand alone type main body 1 capable of accepting an image printing (output) order and printing the same instantaneously. The main body 1 comprises at least the following devices, that is:
(1) an image data inputting means for inputting image data,
(2) an order content inputting means for inputting the order content concerning the image to be output,
(3) an output content designation data producing means for producing the output content designation data recording the image to be output and the accompanying conditions based on the inputted image data and the order content, and
(4) a printing means for printing an image instantaneously.

In order to print a desired image utilizing an image printing apparatus according to the present invention, first, image data with a photograph image recorded, are inputted in a main body 1 by an image data inputting means 4. The image data to be inputted are mainly a photograph image taken by a digital camera or the like, and recorded in a recording medium as digital data, but it is not limited thereto. For example, a computer graphic image produced by a personal computer, digital image data of a synthesized image produced by the editing process of a photography by a personal computer, a photograph image provided already as a printed article, a synthesized image, a computer graphic image, a handwritten illustration or the like, can be used as well.

As the image data inputting means 4, for example, reading devices corresponding to each recording medium, such as a compact flash memory (CF), a smart medium, a compact disc (CD), a magneto-optic disc (MO), a flexible disc (FD), and a PC card, a connector to be connected with a digital camera, capable of reading image data from a memory of the digital camera, can be used. As the image data inputting means 4, a reading device such as a scanner for reading an image from a hard copy, a film, or another printed article so as to convert the same to digital data, can be used as well. By including an image reading device capable of directly scanning an image together with a recording medium reading device in the image data inputting means 4, even in the case the digital image data are not provided, the image printing apparatus according to the present invention can be utilized. For example, in the case the negative film is lost, additional prints can be provided easily from the printed photograph. It is preferable to include a plurality of reading devices of different kinds in the image data inputting means 4 in order to improve the applicability of the image printing apparatus of the present invention.

Next, the order content concerning the image to be output is inputted in the main body 1 using an order content inputting means 6. The order content is prepared preliminarily on the image printing means side so that a user can select one from the prepared content freely. It is preferable that the order content to be selected is shown to the user according to a display device (not shown) for guiding the inputting operation of the order content. As the display device, a color or monochrome CRT, a liquid crystal display or the like, are used commonly, but it can be a simpler device such as a display panel with the operation method shown in items. In addition thereto, a substitute display device such as various kinds of screen panels, plasma displays or the like, can be used as well.

As choices to be selected for the order content, for example, specification of at which frame the image to be printed is among the image data inputted for a plurality of frames, determination of the number of prints and the size, determination of whether or not special printing such as pre-cut seal or the like, is executed, and in addition, in the case the printing system comprises the device or the function of processing the inputted images, such as trimming, enlargement/reduction, synthesis with a frame or the like, the design including the kind of the frame, the layout or the like, and other materials can be prepared.

As the order content inputting means 6, for example, various kinds of pointers such as a touch panel provided integrally with a display device such as a CRT, and a liquid crystal panel, a keyboard, a mouse, and a track ball, can be used. Moreover, the DPOF function (digital print order format) provided in a digital camera can be used as well.

In the case image data 5 and an order content 7 are inputted, an output content designation data producing means 8 is driven in the main body 1. As a result, based on the image data 5 and the order content 7, output content designation data 9 including the image to be output, and the accompanying conditions are produced. The output content designation data denote the data for reproducing the image to be output, such as the data for specifying the image to be output among the inputted image data, and the image data processed based on the inputted image data, and the data including the content to be commanded to a printing means later described for outputting a printed article as ordered, comprising the order content data other than the data of the image to be output, such as the number of prints, the size, and the kind of the paper.

In the case the output content designation data 9 are produced according to the drive of the output content designation data producing means 8, the printed article of the image can be output by driving a printing means 11 provided in the main body 1 based on the output content designation data 9.

As the printing means 11, a printer set corresponding to the printed article most frequently ordered is installed in consideration of the instant property capable of maximally performing the handiness of a post type image outputting apparatus, and the compactness capable of executing in the housing of the post type image outputting apparatus. In the case the space for installing two or more printing means is provided in the housing of the post type image outputting apparatus, it is preferable to add, for example, another printer set corresponding to a pre-cut seal printed article in order to maximally perform the handiness of the post type image outputting apparatus. By the way, the pre-cut seal comprises a self-adhesive sheet which has a printable surface, a substrate sheet on which the self-adhesive sheet is adhered, and cutting lines which is formed on the self-adhesive sheet so as to cut the sheet into a plural number of labels. After printed out, the customer peels off each label from the substrate sheet along the cutting lines, and enjoys affixing the peeled label to any desirable place of the customer's possessions.

As a specific outputting method of the printing means 11, for example, an outputting method suitable for printing based on digital image data, such as the sublimation type thermal transfer method, the melting type thermal transfer method, and the ink jet, can be utilized."

In the main body 1 of the printing apparatus of the present invention, a fee collecting device (not shown) may be provided for collecting the fee for outputting and providing an image. In the case the fee collecting device is provided, the fee collecting device is driven after driving the order content inputting means, more preferably after driving the outputting method selecting device and before outputting a printed article by the drive of the printing means. It is preferable to show the amount to be collected by the fee collecting device to a user on the display device (not shown) together with the order content. When the user inserts a bill and/or a coin in the fee collecting device according to the guide of the amount display by the display device, the fee collecting device calculates the accepted amount and returns the change if any. A receipt publishing device may be provided in the fee collecting device. The receipt publishing device automatically publishes the receipt with the collected amount and the order content printed thereon after completing the fee collection by the fee collecting device. The receipt publishing device may comprise a receipt publishing eliminating device so that the publish of the receipt can be eliminated selectively in the case the user does not need the receipt. In this case, after completing the collection of the fee, an operation guide "Would you like a receipt published" or the like is displayed on the display device (not shown) so that the user presses a corresponding touch panel button or keyboard for executing the choice of publishing or not publishing.

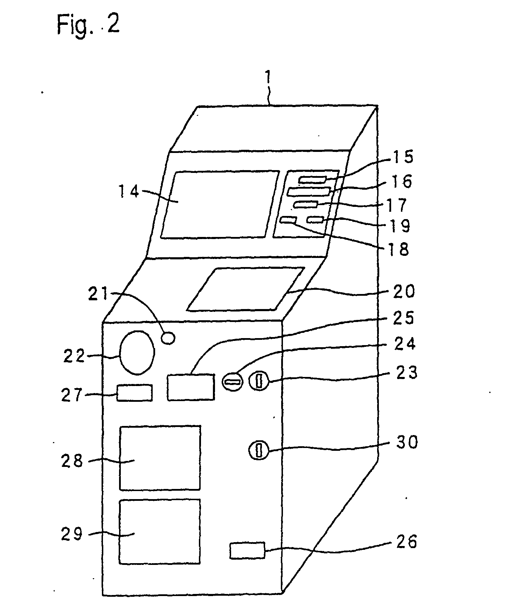

Next, an embodiment of an image printing apparatus according to the present invention will be explained with reference to the drawings. FIG. 2 shows the external appearance of the main body 1 used in the embodiment of the image printing apparatus according to the present invention. In FIG. 2, a screen of a monitor with a touch panel 14 is disposed on the upper front surface of the main body 1. The monitor with a touch panel 14 performs as a display device for displaying the operation guide, the operation state, the read out image or the processed image or the like as well as a device for the inputting operation for inputting an order content, publishing an accept slip, inputting personal information or the like.

Insertion ports 15 to 19 for various recording media are provided sideways to the monitor with a touch panel 14. A scanner reading surface 20 is provided on a horizontal part dividing the upper part and the lower part for reading the image of a printed article and processing the same to digital data. In this embodiment, as the insertion ports for the various recording media, specifically, a flexible disc insertion port 15, a CD-ROM insertion port 16, a PC card insertion port 17, a smart medium insertion port 18, and a compact flash insertion port 19 at a position on the whole. Moreover, the main bodies of each reading device are installed inside the housing of the main body 1 corresponding to the insertion port of each recording medium. A shutter (not shown) may be provided on each insertion port so that the recording medium cannot be taken out until collection of the fee is completed.

In the lower part of the main body 1, a maintenance key 21, a speaker 22, a coin insertion port 23, a coin return lever 24, a bill insertion port 25, a change return port 26, a receipt ejection port 27, a printed article (for standard printing) outlet port 28, a printed article (for pre-cut seal) outlet port 29, and a front door port/closing key 30 are disposed. The maintenance key 21 is a key for switching an ordinary drive mode capable of accepting a customer, and an administration mode for setting the image printing system or maintenance by an administrator. The speaker is for reproducing the sound, BGM, effect sound or the like while waiting or operation.

In this embodiment, the coin insertion port 23, the coin return lever 24, the bill insertion port 25, and the change return port 26 comprise a part of the fee collecting device. A customer pay for the fee by inserting a coil in the coin insertion port 23 and/or inserting a bill in the bill insertion port 25. In the case there is a change, it is discharged from the change return port 26 so that it is received by the customer. Moreover, in the case a coin is choked, it is discharged from the change return port 26 by turning the coin return lever 24 so that it is received by the customer.

In this embodiment, the receipt ejection port 27 comprises a part of the receipt publishing device and the accept slip publishing device. A receipt with the collected amount and the order content printed is discharged from the receipt ejection port 27.

In this embodiment, the printed article (for standard printing) outlet port 28 and the printed article (for pre-cut seal) outlet port 29 comprise the printing means. In the case the customer designates a printing operation, after inputting the command, he or she waits completion of the printing process in front of the main body 1 so as to receive a printed article discharged from the printed article outlet port 28 or the printed article outlet port 29.

By turning the front door port/closing key 30, the front door is opened so that the maintenance work for each device installed inside the housing can be executed. In the housing of the main body 1, each main body is installed corresponding to the screen of the monitor with a touch panel, the insertion port, and the scanner reading surface. A volume adjusting part is installed corresponding to the speaker 22. Corresponding to the coin insertion port 23, the coin return lever 24, the bill insertion port 25, and the change return port 26, a coin mech (coin processing device) for identifying the coins, storing, and returning the change, a bill bari (bill processing device) for identifying the bills, and storing, and a safe for storing the coins in the case the coin mech is fill, are installed. Corresponding to the receipt ejection port 27, a receipt printer is installed. Furthermore, corresponding to the printed article outlet port 28, and the printed article outlet port 29, a printer is installed.

Moreover, although it is not apparently recognized by the external appearance, inside the housing of the main body 1, a personal computer including a control part for controlling each device in the main body 1, a power source box for converting the voltage, an interruptible power supply device for preventing breakage of the CPU, the hard disc or the like in the control part at the time of blackout or the like are installed.

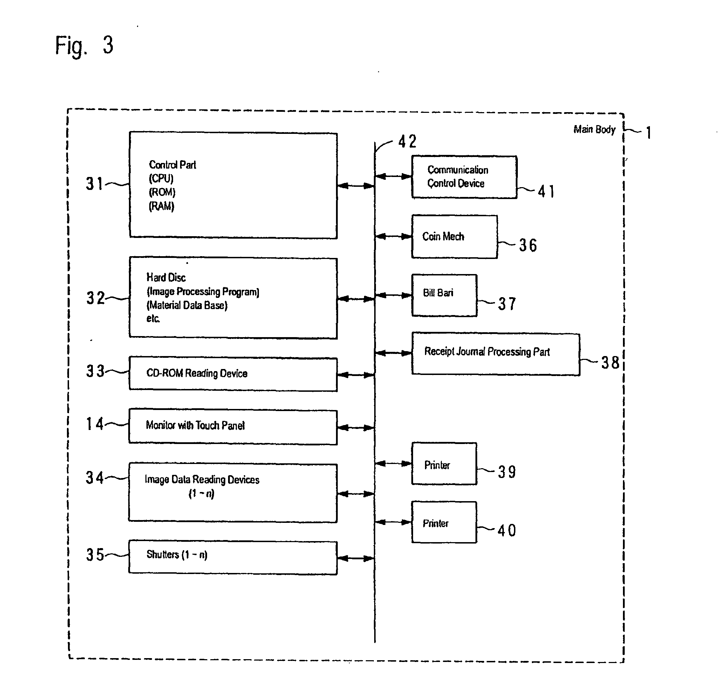

FIG. 3 shows a block diagram according to an embodiment of an image printing apparatus having the main body 1 shown in FIG. 2. In this embodiment, the main body 1 comprises a control part 31, a hard disc 32, a CD-ROM reading device 33, a monitor with a touch panel 14, n sets of image data reading devices 34, n sets of shutters 35, a coin mech 36, a bill bari 37, a receipt journal processing part 38, two sets of printers 39, 40, and a communication control device 41, connected via a bus 42.

The control part 31 of the main body 1 comprises a CPU, a ROM, and a RAM for controlling the drive of the devices connected via the bus according to a program stored in the hard disc 32 as a large scale memory medium. In the hard disc 32, programs for controlling the drive of the devices, such as a reading program corresponding to each recording medium, an port/closing control program for the shutters, a fee charging program or the like, as well as an image processing program for processing an inputted image, a material data base storing information of a frame to be used for the image synthesis or the like, are stored so as to be read out as needed and stored in the RAM for driving various devices. The CD-ROM reading device 33 is used for upgrading the version of the programs and the information stored in the ROM or the hard disc of the main body 1 such that a CD-ROM for upgrading the version is inserted in the CD-ROM reading device 33 for rewriting the data with the main body switched to the administration mode by the maintenance key.

In FIG. 3, by selecting and executing the touch panel buttons displayed on the monitor with a touch panel 14 according to the operation guide displayed on the monitor with a touch panel 14 of the main body 1, a series of the operation for reading the image data to the output of a printed article can be executed. In this embodiment, first, the menu of the printed article is selected according to the operation guide displayed on the monitor with a touch panel 14, and in the case the touch panel button is pressed, an operation screen for guiding the input of the image data is shown on the monitor with a touch panel 14.

The image data reading devices 34 include various reading devices 1 to n corresponding to various kinds of recording media so that the customer can input photography image data recorded in a recording medium he or she has into the main body 1 using the corresponding reading device. The image data reading devices 34 also include a scanner so that an image can be read out from a printed article, processed to be digital data, and inputted into the main body 1. In the case the image data reading devices 34 are not dedicated for reading but also they can record image data in a recording medium, the customer can store the image data of the processed image produced by operating the main body 1 and take it home with him or her. The shutters 35 are provided at the recording medium insertion ports of the reading devices 1 to n so that the taking out operation of the recording medium can be prohibited during the reading process, or until the fee charging process is completed by port or closing the recording medium insertion port.

In the case the images provided by the customer are inputted as digital data using the image data reading devices 34 according to the operation guide on the monitor with a touch panel 14, the inputted image is shown on the monitor 14 so that an image can be selected according to the operation guide of the monitor with a touch panel 14. At the time, it is convenience to show the images as a thumb nail image or the like, and select an image by the touch panel method.

In the case an image is selected, an image processing program is executed according to a printing menu already selected. The customer can process the image, such as reduction, enlargement, rotation, deformation, synthesis with another image or the like according to the operation guide on the monitor with a touch panel 14. At the time, a material image stored in the material data base, such as a frame can be utilized as well.

After completion of the process or synthesis of the image, according to the operation guide on the monitor with a touch panel 14, the order content other than the printing menu and the process content, such as the number of prints, the print size or the like, is inputted. Also at the time, the order content can be inputted by pressing a button or ten keys displayed on the touch panel. In the case a printing menu not requiring the process or synthesis of an image is selected at the time of the start, the operation screen for guiding the process or synthesis operation is eliminated so that the operation guide for guiding the other order content is displayed immediately.

In the case all the order content is inputted, a printing command is executed. When the printing command is provided according to the operation guide on the monitor with a touch panel 14, the charged fee is displayed on the monitor 14 together with the order content and the fee payment is requested. In the case a coin is inserted and/or a bill is inserted to the main body 1 according to the payment request, the coin mech 36 and/or the bill bari 37 is driven so as to execute the fee charging process such as judgment of genuineness of the coin or bill inserted to the main body 1 for the fee payment, the judgment of the kind thereof, the amount calculation, the discharge of the change or the like. In the case a printing operation is commanded, after finishing the fee charging process, the receipt journal part 38 prints the printing menu, the collected fee amount or the like on a receipt paper and discharges the receipt. The system can be set so as to eliminate the drive of the fee collecting device in the case request of the fee payment is not needed.

After the discharge of the receipt, the shutter is opened so as to enable taking out of the inserted recording medium so that the operation screen for guiding the take out of the recording medium is displayed on the monitor with a touch panel 14. In the case the recording medium is taken out, a printed article is output by the printer 39 or 40. The printer 39 can output a standard size printed article by a standard image quality, and the printer 40 can output a pre-cut seal printed article.

Next, the procedure of the order accept process and the printing process according to an embodiment of an image printing apparatus of the present invention will be explained with reference to a flow chart and the indication on the monitor with a touch panel 14.

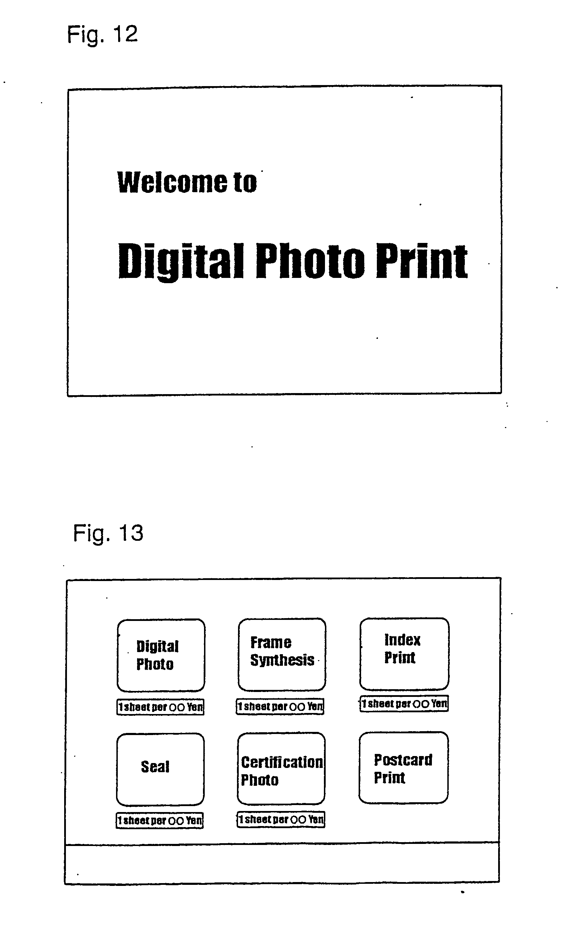

In the embodiment of the image printing apparatus according to the present invention, a start screen as shown in FIG. 12 is displayed on the screen of the monitor with a touch panel 14 comprising the main body. In the case an optional position of the start screen is touched by a hand, a main menu screen as shown in FIG. 13 is indicated. In the case the main menu screen is left for a predetermined time, it returns to the start screen. In the main menu screen, the kinds of the printed articles to be selected are shown. Specifically, touch panel buttons for the "digital photo", the "frame synthesis", the index print", the "seal", the "certification photograph", and the "postcard print" are shown in the upper and lower two rows.

In the case the "digital photo" is selected in the main menu screen and the touch panel button thereof is touched, a print out can be provided by reading the image data from a smart medium, a PC card, a compact flash card, a CD-ROM, or a flexible disc (FD), or reading the image data from a printed article such as a photograph using a scanner.

In the case the "frame synthesis" is selected, a print out can be provided by reading the image data from a smart medium, a PC card, a compact flash card, a CD-ROM, or a flexible disc (FD), or reading the image data from a printed article such as a photograph using a scanner, and synthesizing the read out image and a frame prepared by the system side.

In the case the "index print" is selected, an index print with a thumb nail image displayed can be printed out by reading the image data from a smart medium, a PC card, a compact flash card, a CD-ROM, or a flexible disc (FD).

In the case the "seal" is selected, a pre-cut seal can be printed out by reading the image data from a smart medium, a PC card, a compact flash card, a CD-ROM, or a flexible disc (FD), or reading the image data from a printed article such as a photograph using a scanner, and synthesizing the read out image and a frame prepared by the system side. In the pre-cut seal, a plurality of small screens (frames) of the same image are printed, with each small screen divided by half cut.

In the case the "certification photograph" is selected, an image for the certification photograph is taken by a digital camera in the shop so as to be stored in a flexible disc, and then, the stored image data are read out by the main body so that they can be printed out after selecting the size from the driver's license size, the curriculum vitae size, the passport size, and the visa size, and selecting color or monochrome.

In the case the "post card print" is selected, a print can be provided by reading the image data from a smart medium, a CF card, a flexible disc (FD), a PC card, or a CD-ROM, or reading the image data from a printed article such as a photograph using a scanner, producing the postcard data by processing the read out image, and reading the postcard data from the recording medium storing the same.

### (1) Digital photo

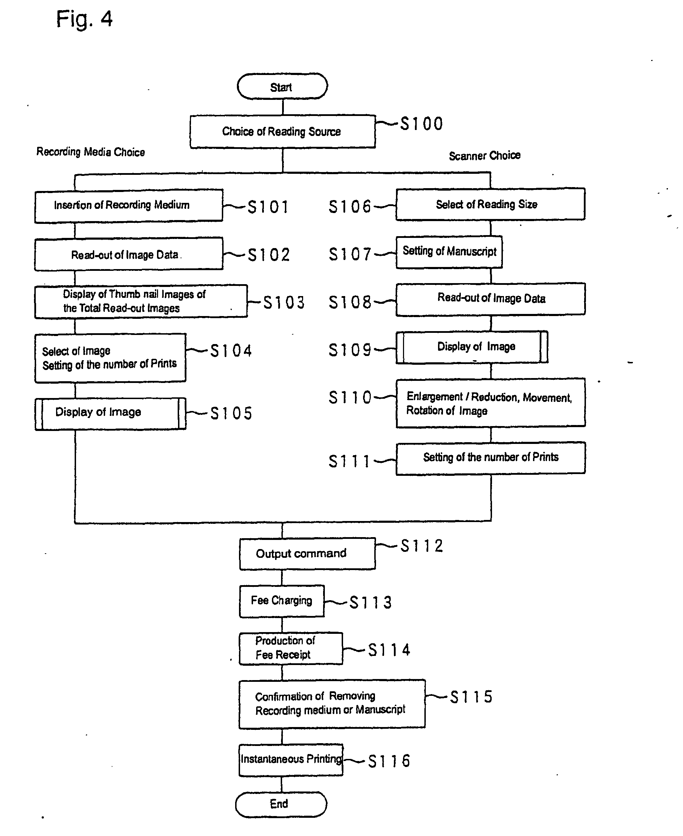

First, the procedure in the case the "digital photo" is selected will be explained. In the main menu screen, if the "digital photo" position is touched by a hand, the "digital photo" procedure shown in FIG. 4 is started. In each operation screen to be indicated after the start of the "digital photo" procedure, in principle, a "cancel" button and a "return to the previous screen" button are provided so that it can return to the start screen by pressing the "cancel" button, and it can return to the operation screen of the previous step by pressing the "return to the previous screen" button so as to enable change of the operation.

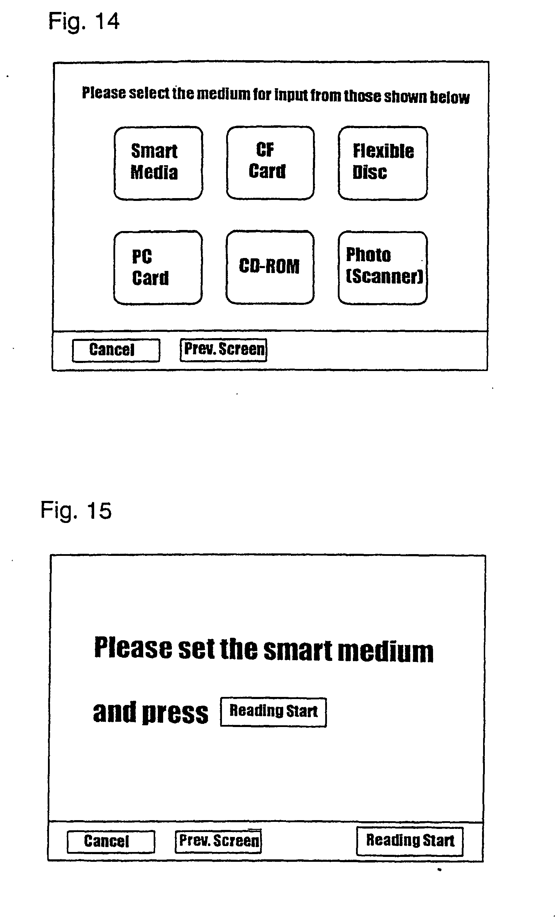

In the case the "digital photo" procedure is started, as shown in FIG. 14, an operation screen with the image data reading sources shown is indicated so that a reading source can be selected (S100). In the operation screen at the time, the message "please select the medium for input from those shown below" is shown laterally in the uppermost row, and therebelow, the touch panel buttons each with the name of the smart medium, the compact flash card (CF card), the flexible disc, the PC card, the CD-ROM, and the photograph (scanner) are shown. In the operation screen, in the case a touch panel button is touched by a hand, the corresponding reading source is selected.

If any of the reading sources is selected from the smart medium, the CF card, the flexible disc, the PC card, and the CD-ROM, the operation screen showing the inserting method corresponding to the selected recording medium is indicated so that the recording medium can be inserted (S101). Thereafter, the procedure of S101 to S105 follows.

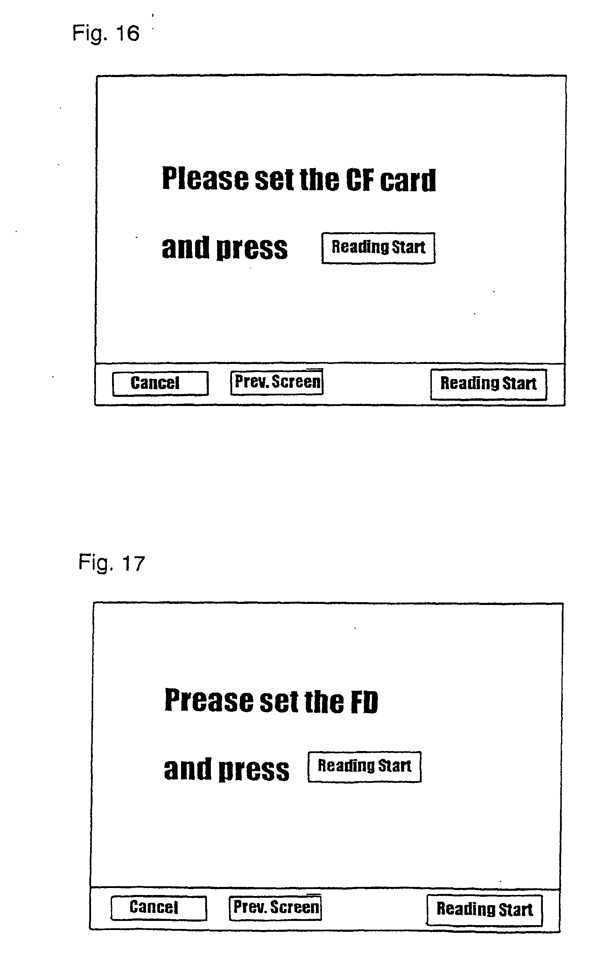

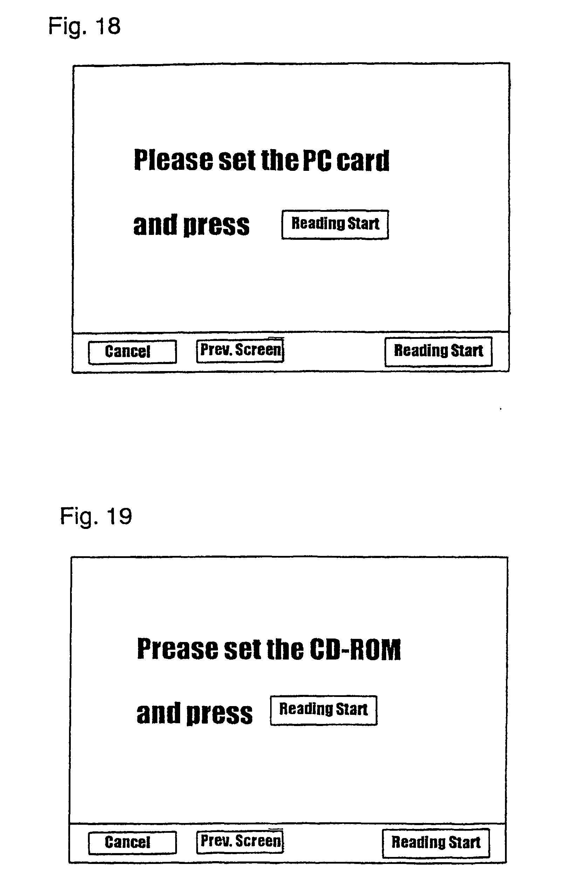

In the operation screen in the case the smart medium is selected, as shown in FIG. 15, the message "please set the smart medium and press the reading start" is shown laterally in the uppermost row, and a "reading start" button is provided in the lowermost row together with the "cancel" button and the "return to the previous screen" button. Similarly, in the case the CF card is selected, the operation screen shown in FIG. 16 appears. In the case the flexible disc is selected, the operation screen shown in FIG. 17 appears. In the case the PC card is selected, the operation screen shown in FIG. 18 appears. And in the case the CD-ROM is selected, the operation screen shown in FIG. 19 appears.

In the case a recording medium is inserted in the predetermined insertion port according to the guide of the operation screen (S101) and the reading start button on the touch panel is touched by a hand, the insertion port with the recording medium inserted is closed by the shutter so as to start the reading operation of the image data (S102).

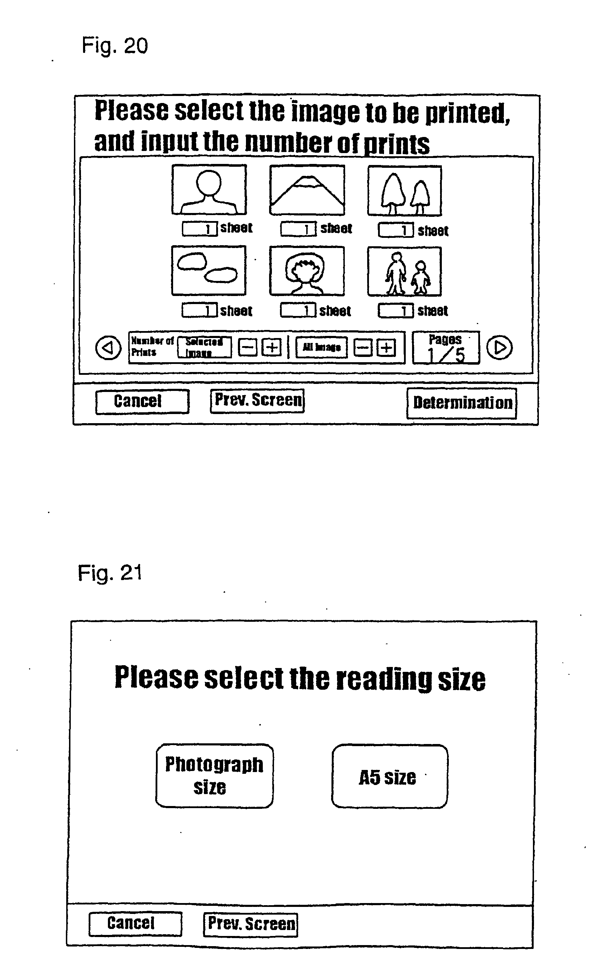

As shown in FIG. 20, the operation screen with the thumb nail images of the total read out images shown appears (S103). In the operation screen at the time, the message "please select the image to be printed, and input the number of prints" is shown laterally in the uppermost row, and therebelow, total 6 thumb nail images are shown in the two rows laterally, with the column for inputting the number of prints provided to each thumb nail image. Below the thumb nail images, "+" and "-" buttons for increasing or reducing the number of prints, and "+" and "-" buttons for the total images are provided. By selecting a thumb nail image on the screen for selecting the image, and touching the "+" and "-" buttons for the "selected image", the number of prints for the selected image can be increased or reduced individually. In contrast, by touching the "+" and "-" buttons for the total images, the number of prints can be increased or reduced for all the images displayed on the screen.

In the case the number of the thumb nail images so large than they cannot be shown on one screen, all the thumb nail images are shown, divided in a plurality of pages. The page number currently appearing on the screen and triangular scroll buttons for moving forward or backward among the pages are displayed on the screen in the same row as the buttons for increasing or reducing the number of prints. Moreover, in the lowermost row of the operation screen at the time, a "determination" button is provided together with the "cancel" button and the "return to the previous stage" button. By selecting the images to be printed in the operation screen, setting the number of prints for each image, and pressing the determination button, the order content is set (S104).

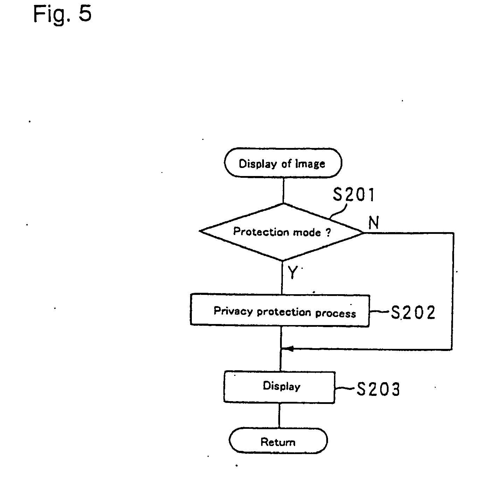

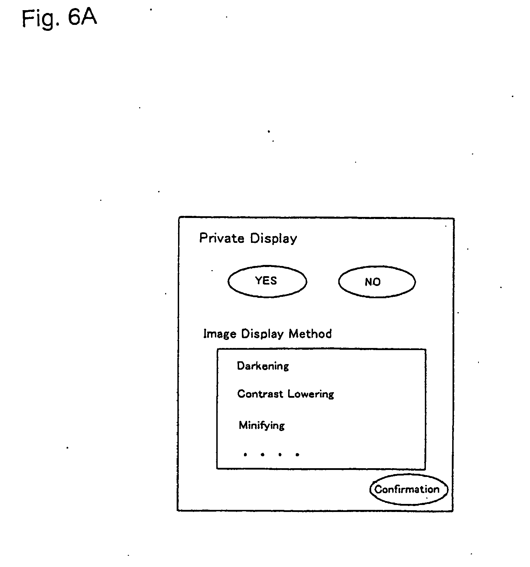

Next, the display process of the selected images as the subjects to be printed is executed (S105). FIG. 5 shows the details of the image display process. In the image display process, as shown in FIG. 6A, whether or not the customer selects the privacy protection mode is inquired (S201). In the case the privacy protection mode is selected, the privacy protection process is applied to the image data (S202), and the images after the process are shown (S203). In the case the customer does not select the privacy protection mode, the images are shown as they are (S204). Then, the process returns to the main routine shown in FIG. 4.

The privacy protection mode is a process for having the images displayed on the screen of the image printing apparatus provided with a predetermined process so as to be seen hardly from a third person around there during the setting necessary for the printing operation (designation of the image data to be printed, designation of the number of prints or the like) by the customer, or during the actual printing process. Specifically, an image darkening process, a contrast lowering process, a minifying process, a binary process, an edge iris process, an embossing process or the like can be presented. At least one of them is applied.

Since these processes are executed for having the images hardly seen from the a third person around there, the images can be hardly seen by the customer who is going to print the same to some extent. However, since the customer knows the images to be printed to some extent, even in the case the images can hardly be seen to some extent by the privacy protection process, it is sufficient if only the images to be printed can be recognized. Moreover, by providing a plurality of processes to be executed as the privacy protection process as mentioned above so as to be selected by the customer, since the customer can select the process which is most easily seen by the customer, the risk of inability of executing the necessary process for printing by the customer due to the privacy protection process can be avoided sufficiently.

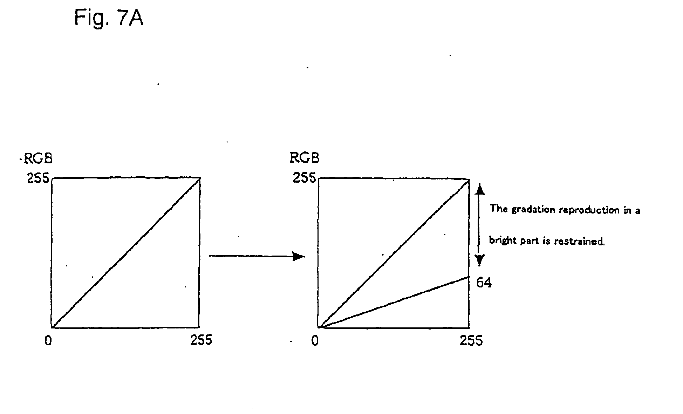

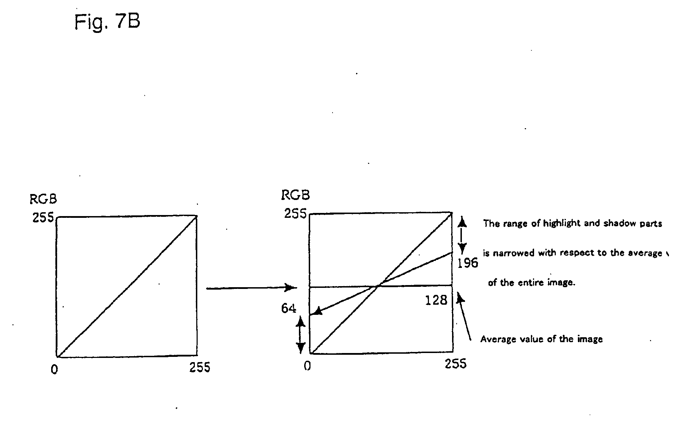

The processes will be explained simply. The image darkening process is, as shown in FIG. 7A, for darkening the entire image by lowering the luminosity level of the entire image by lowering the number of gradation bits so as to be seen hardly from the people around there. The contrast lowering process is, as shown in FIG. 7B, for lowering the contrast by narrowing the shadow part range with respect to the luminosity average value of the entire image. The minifying process is for reducing the size of the displayed images. The binary process is for displaying the image luminosity level binarized by an appropriate threshold value. The edge iris process is for extracting the contour portion of the image, and displaying with the luminosity of the contour portion increased. The embossing process is for indicating as a raised pattern by the image process. Those particularly preferably as the privacy protection process are the edge iris process, the embossing process, and a combination thereof. The process to be executed as the privacy protection process may be a process among the above-mentioned preliminarily determined on the image printing apparatus side such that the user can designate any of them on the screen shown in FIG. 6A. Furthermore, the degree of modulation with respect to the original image in each process can be provided such that a modulation level value is provided preliminarily in the privacy protection process program of the image printing apparatus as a fixed value so that the modulation process of the level value is executed automatically according to the selection of the process, or furthermore, by displaying a level adjustment dialogue including, for example, selection buttons of several stages, "+" and "-" increasing or reducing buttons, a level slider, a numerical value inputting box or the like on the next operation screen (not shown) so as to be operated by the user, a function of enabling the modulation setting according to the selected optional level can be added for allowing the level selection by the user. In this case, by functioning an "automatic level adjustment" command simultaneously with the process selection so that the processed image with the modulation process of the predetermined level value is indicated, only a user requiring further adjustment need to have the level adjustment operation so that complication of the operation by the multi-functions can be prevented. From the same reason, it is also preferable to provide an "automatic setting" button or the like on the adjustment operation screen.

Since these processes themselves are known, further detailed explanation is not given.

In the "digital photo" procedure, it is also possible to select the "photograph (scanner) " as the reading source so that the image data are read out from a printed article such as a photograph using a scanner (S106 to S111). In the operation screen shown in FIG. 14, in the case the "photograph (scanner) " is selected as the reading source, as shown in FIG. 21, the operation screen for selecting the reading size appears (S106). In the operation screen at the time, the message "please select the reading size" is shown laterally in the uppermost row, and therebelow a button for selecting the photograph size and a button for selecting the A5 size are provided. In the case the photograph size is selected, a manuscript of a size within the ordinary photograph size of vertically 89 mm × laterally 127 mm can be read. In the case the A5 size is selected, a manuscript of a size over the ordinary photograph size up to vertically 148.5 mm × laterally 210 mm can be read.

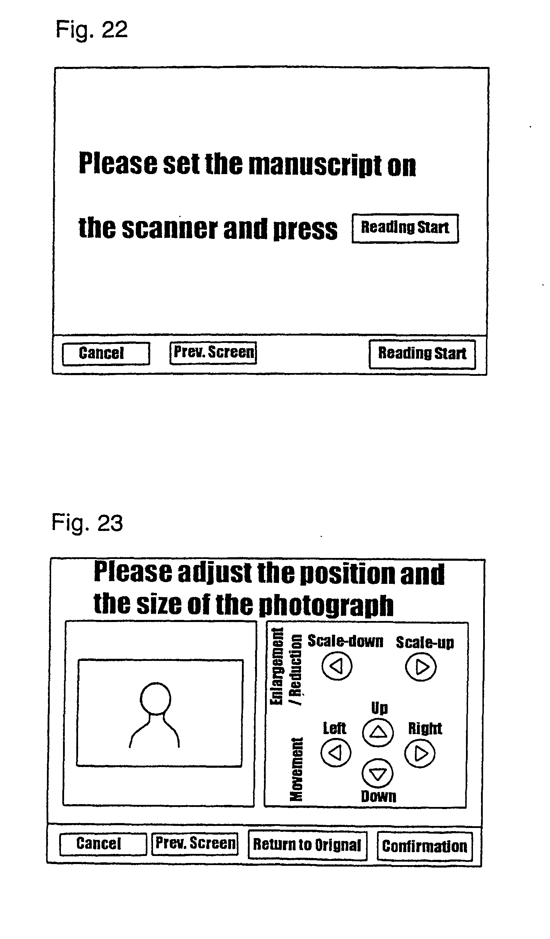

In the case the button for the photograph size or A5 size is touched, the corresponding reading size is selected so that the operation screen for reading the manuscript by a scanner appears as shown in FIG. 22 (S107). In the operation screen at the time, the message "please set the manuscript on the scanner and press the reading start" is shown laterally in the uppermost row, and the "reading start" button is provided in the lowermost row together with the "cancel" button and the "return to the previous screen" button.

In the case the manuscript is set on the scanner and the reading start button is touched according to the operation screen shown in FIG. 22, the manuscript is scanned and read so as to obtain the image data (S108). In the case the reading operation is finished, the image display process is executed (S109). The process is same as the above-described step S104 so that the image with the privacy protection process applied according to the need of the customer is indicated. In the operation screen at the time, as shown in FIG. 23, the message "please adjust the position and the size of the photograph" is shown laterally in the uppermost row, and below the message on the half side, the read out image is displayed, and on the other half side, operation panels for the enlargement/reduction, and the movement are disposed in two rows vertically. In the lowermost row, the "cancel" button, the "return to the previous screen" button, the "return to the original" button, and the "confirmation" button are provided. In the case the customer selects the privacy protection process, the image shown on the left side of FIG. 23 is the one after applying the privacy protection process.

In the enlargement/reduction panel, an enlargement button and a reduction button are provided so that the size of the read out image can be changed by touching these buttons. In the movement panel, movement buttons for upward, downward, leftward and rightward are provided so that the position of the image can be adjusted by touching these buttons. In the case the return to the original button is pressed, it returns to the original image size and the position. In the case the confirmation button is touched after finishing the image adjustment, the image adjustment is completed (S110).

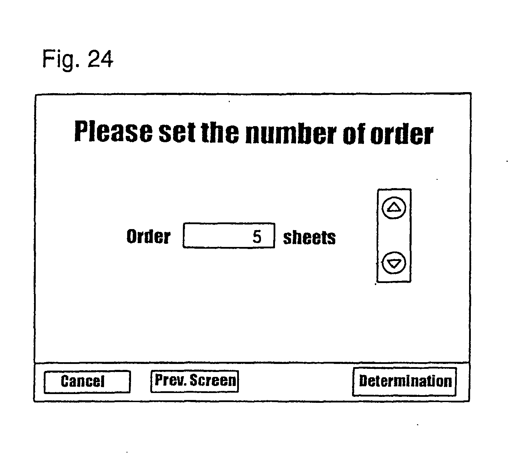

In the case the image adjustment is completed, as shown in FIG. 24, the operation screen for setting the number of prints for the image appears (S111). In the operation screen at the time, the message "please set the number of order" is shown laterally in the uppermost row, and below the message, a column for inputting the number of order and input buttons for increasing or reducing the number of order are provided. In the lowermost row, the "cancel" button, the "return to the previous screen" button, and the "determination" button are provided. The input buttons include a number increase button of an upward triangle, and a number reduction button of a downward triangle. By touching these, the number of order can be increased or reduced. By touching the determination button after finishing the input operation, the order content including the number of order can be set (S111).

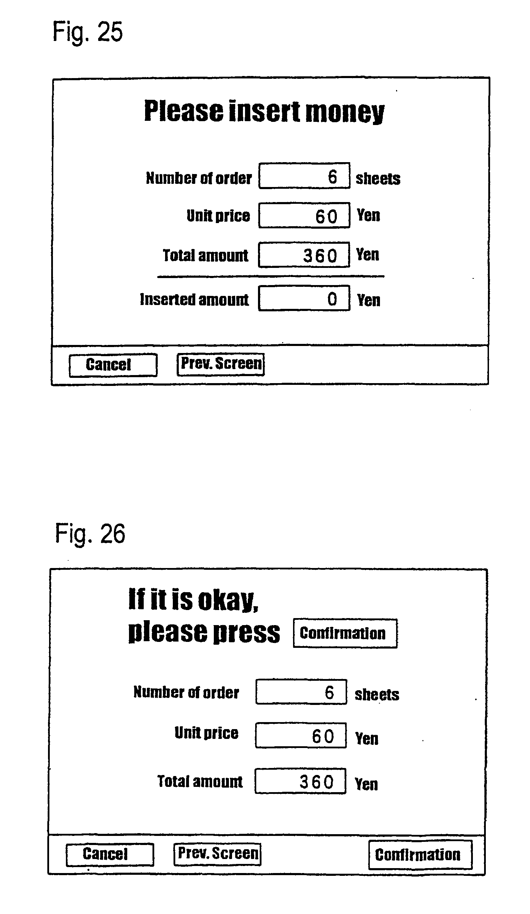

In the case the order content is set by reading the image data from a recording medium (S105), or the order content is set by reading the image data from a printed article such as a photograph by a scanner (S111), then the customer provides the output command (S112). As shown in FIG. 25, the guidance screen for charging the fee appears for executing the fee charging process (S113). Thereafter, the procedure of S114 to S116 follows.

In the guidance screen for the fee charging process, the message "please insert money" is shown laterally in the uppermost row, and therebelow, the number of order, the fee for one sheet (unit price), the total amount (sum of the charged amount), and the inserted fee (inserted amount) are shown laterally from above successively in four rows . When the amount inserted in the coin insertion port and/or the bill insertion port according to the explanation on the guidance screen reaches or exceeds the total charged amount, in the case it is a mode for only confirming the total amount, the change is discharged from the change discharging port as needed, and the guidance screen for requesting the fee charge content appears as shown in FIG. 26. In the guidance screen at the time, the message "if it is okay, please press the confirmation button" is shown laterally in the uppermost row, and therebelow, the number of order, the fee for one sheet, and the total amount are shown laterally from above successively in three rows. In the lowermost row, the "confirmation button" is provided together with the "cancel" button and the "return to the previous screen" button. In the guidance screen, in the case the confirmation button is touched, the fee charging process is completed so as to move to the next step.

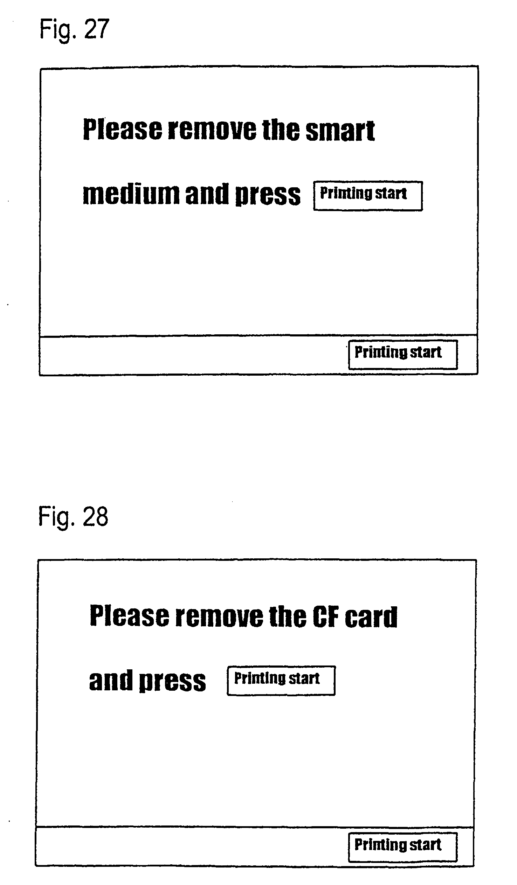

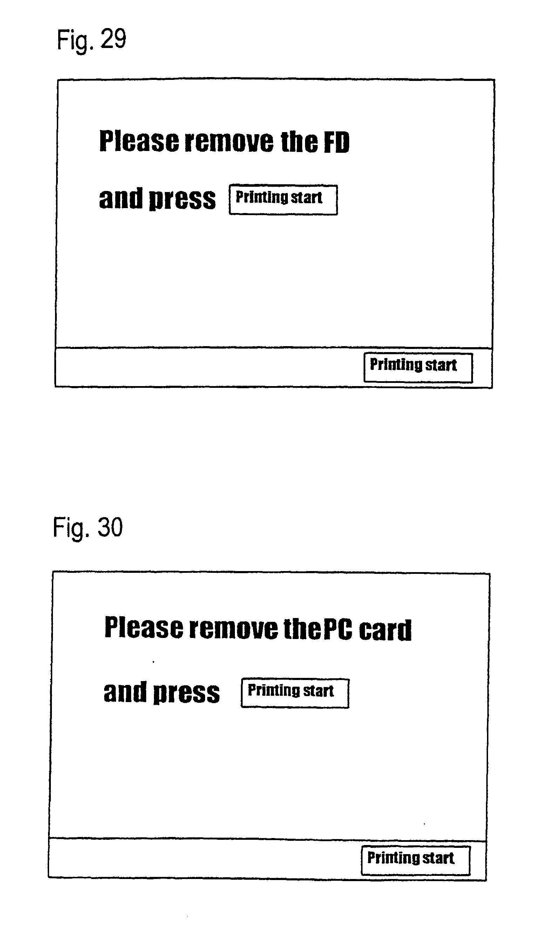

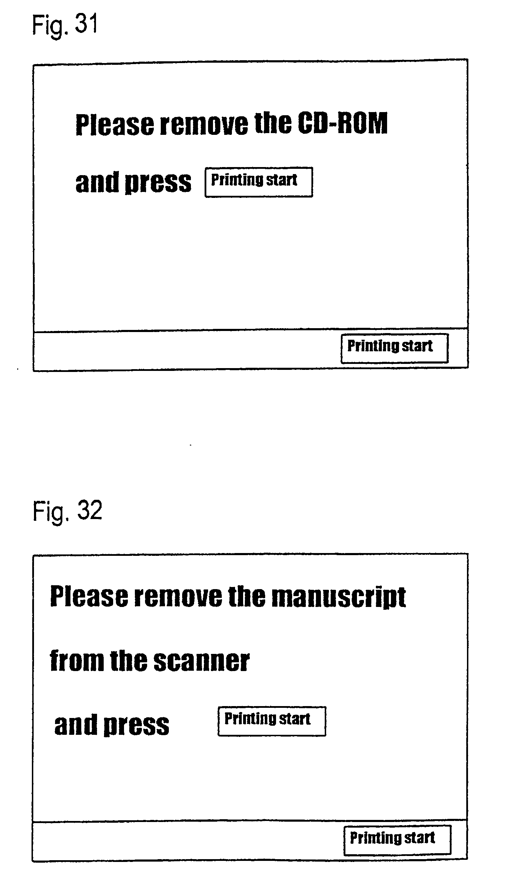

When the fee charging process is completed, the receipt is published so as to be discharged from the receipt ejection port (S114). After publishing the receipt, the operation screen for removing the recording medium or the manuscript, which is the reading source of the image data, appears, and furthermore, in the case the recording medium is inserted in the reading device, the shutter of the insertion port is opened (S115). As shown in FIG. 27, in the operation screen in the case the smart medium is inserted, the message "please remove the smart medium and press the printing start" is shown laterally, and the "printing start" button is provided in the lowermost row. Similarly, in the case the CF card is inserted, the operation screen as shown in FIG. 28 appears. In the case the flexible disc is inserted, the operation screen as shown in FIG. 29 appears. In the case the PC card is inserted, the operation screen as shown in FIG. 30 appears. And in the case the CD-ROM is inserted, the operation screen as shown in FIG. 31 appears.

Moreover, in the operation screen in the case the printed article such as a photograph is read out by the scanner, as shown in FIG. 32, the message "please remove the manuscript from the scanner and press the printing start" is shown laterally in the uppermost row, and the "printing start" button is provided in the lowermost row.

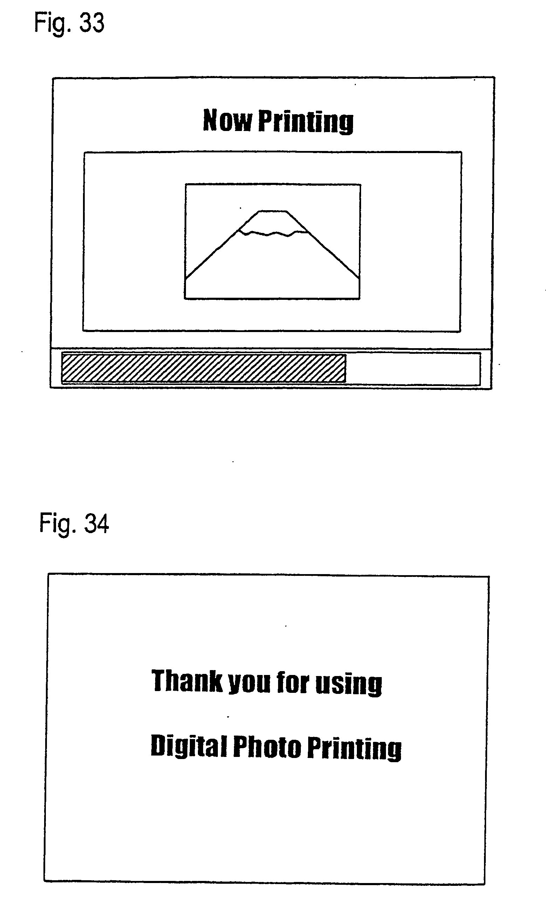

In the case the recording medium inserted in the reading device or the manuscript placed on the glass surface of the scanner is removed and the printing start button is touched according to the guidance on the operation screen, the instant printing is started by the printer installed in the main body. During the printing process, the guidance screen as shown in FIG. 33 appears. In the guidance screen at the time, the message "now printing" is shown laterally in the uppermost row, therebelow, the image being printed is shown, and below the image, a time line roughly indicating the proceeding state of the printing process is lit. Moreover, in the case of the privacy protection mode, a predetermined process is applied on the displayed image so that the image is displayed in the state hardly seen from the people around there. When the printing process is finished, the printed article is discharged from the printed article outlet port (standard printing) of the main body, and the finish screen as shown in FIG. 34 appears. The finish screen in the meantime returns to the start screen.

### (2) Frame synthesis

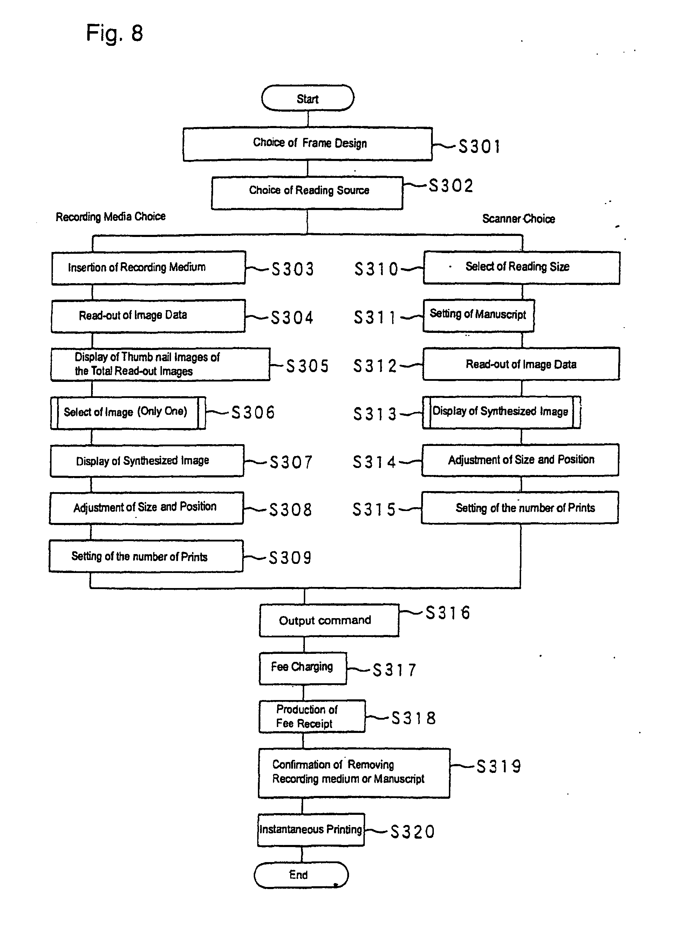

Next, the procedure in the case the "frame synthesis" is selected will be explained. In the main menu screen, if the "frame synthesis" position is touched by a hand, the "frame synthesis" procedure shown in FIG. 8 is started. In each operation screen to be indicated after the start of the "frame synthesis" procedure, in principle, a "cancel" button and a "return to the previous screen" button are provided so that it can return to the start screen by pressing the "cancel" button, and it can return to the operation screen of the previous step by pressing the "return to the previous screen" button so as to enable change of the operation.

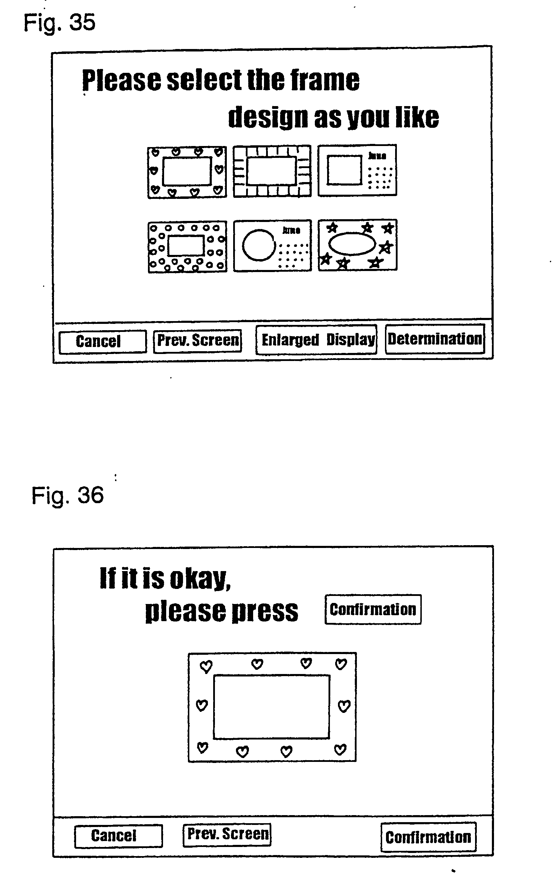

In the case the "frame synthesis" procedure is started, as shown in FIG. 35, an operation screen with the frames shown is indicated so that a frame can be selected (S301). In the operation screen at the time, the message "please select the frame design as you like" is shown laterally in the uppermost row, and below the message, frame designs are shown. In the lowermost row, the "cancel" button, the "return to the previous screen" button, the "enlarged display" button, and the "determination" button are provided. The frame designs are provided from the material data base so as to be indicated on the screen.

In the case the enlarged display button is touched after touching one of a frame displayed on the screen, as shown in FIG. 36, the enlarged image of the selected frame is shown. In the operation screen at the time, the message "if it is okay, please press the confirmation button" is shown laterally in the uppermost row, and below the message, the enlarged frame design is shown. In the lowermost row, the "confirmation button" is provided together with the "cancel" button, and the "return to the previous screen" button. In the case the customer does not like the enlarged frame, by touching the return to the previous screen button, the screen with the frames listed can be shown so that another frame can be selected.

In the case the determination button is touched immediately after selecting the frame in the screen of FIG. 35, or in the case the confirmation button is touched after indicating the enlarged image in the screen of FIG. 36, the frame to be used is set.

In the case the frame is set, as shown in FIG. 14, the operation screen for selecting the reading source appears (S302). In the operation screen, in the case a touch panel button is touched by a hand, the corresponding reading source is selected.

If any of the reading sources is selected from the smart medium, the CF card, the flexible disc, the PC card, and the CD-ROM, the operation screen showing the inserting method corresponding to the selected recording medium (FIG. 15 to FIG. 19) is indicated so that the recording medium can be inserted (S303). Thereafter, the procedure of S304 to S309 follows.

In the case a recording medium is inserted in the predetermined insertion port according to the guide of the operation screen (S303) and the reading start button on the touch panel is touched by a hand, the insertion port with the recording medium inserted is closed by the shutter so as to start the reading operation of the image data (S304).

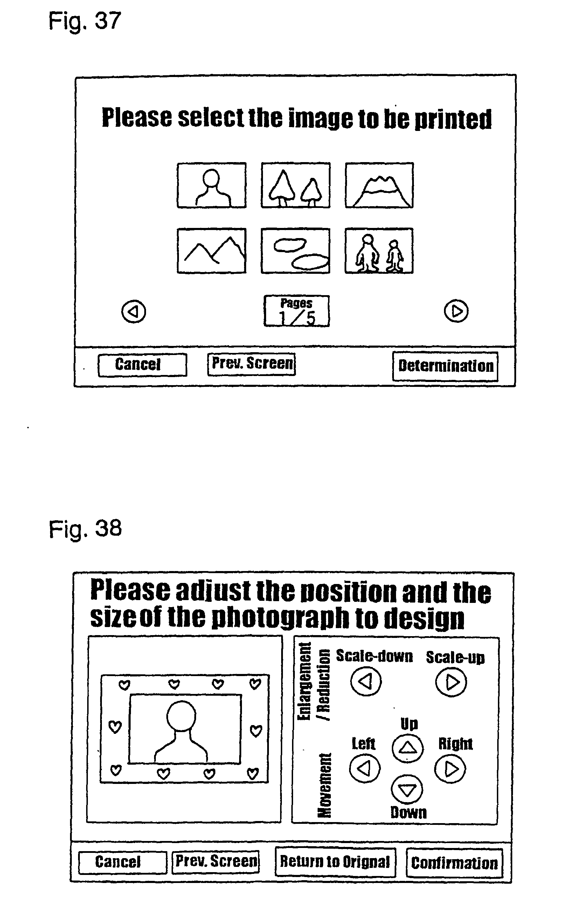

After finishing the reading operation, as shown in FIG. 37, the operation screen with the thumb nail images of the total read out images shown appears (S305). In the operation screen at the time, the message "please select the image to be printed" is shown laterally in the uppermost row, and below the message, total 6 thumb nail images are shown in the two rows laterally. Below the thumb nail images, the number of pages of the thumb nail images shown in the operation screen, the forward scroll button, and the backward scroll button are shown. In the lowermost row, the "determination" button is provided together with the "cancel" button and the "return to the previous stage" button.

By selecting only one image to be printed from the listed thumb nail images, and pressing the determination button, the image display process is executed (S306). The image display process is same as that shown in FIG. 5 so that whether or not the privacy protection mode is used is selected by the user. Then, as shown in FIG. 38, the operation screen showing the image with the selected image and the frame synthesized appears (S307) so that the synthesized image can be adjusted (S308). In the case of the privacy protection mode, the image shown at the time is in the state with the process applied. In the operation screen at the time, the message "please adjust the position and the size of the photograph according to the design" is shown laterally in the uppermost row, and below the message on the half side, the synthesized image is displayed, and on the other half side, the operation panels for the enlargement/reduction, and the movement are disposed in two rows vertically. In the lowermost row, the "cancel" button, the "return to the previous screen" button, the "return to the original" button, and the "confirmation" button are provided.

In the enlargement/reduction panel, the scale-up button and scale-down button are provided so that the size of the read out image can be changed so as to be fit to the frame by touching these buttons. In the movement panel, the movement buttons for upward, downward, leftward and rightward are provided so that the position of the image can be adjusted to the frame by touching these buttons. In the case the return to the original button is touched, it returns to the original image size and the position. In the case the confirmation button is touched after finishing the image adjustment, the synthesized image is set.

In the case the synthesized image is set, as shown in FIG. 24, the operation screen for setting the number of prints (S309). In the operation screen at the time, the message "please set the number of order" is shown laterally in the uppermost row, and below the message, a column for inputting the number of order and input buttons for increasing or reducing the number of order are provided. In the lowermost row, the "cancel" button, the "return to the previous screen" button, and the "determination" button are provided. The input buttons include the number increase button of the upward triangle, and the number reduction button of the downward triangle. By touching these, the number of order can be increased or reduced. By touching the determination button after finishing the input operation, the order content including the number of order can be set.

In the "frame synthesis" procedure, it is also possible to select a printed article such as a photograph as the reading source so that the image data are read out using the scanner (S310 to S312). The procedure of reading the image data using the scanner is same as the digital photo procedure S106 to 108. That is, in the case the photograph (scanner) is selected as the reading source (S302) in the operation screen (FIG. 14) for selecting the image data reading source, the operation screen for selecting the reading size (FIG. 21) appears so that the photograph size or the A5 size can be selected (S310). In the case the reading size is selected, the operation screen for reading the manuscript by the scanner (FIG. 22) appears. In the case the manuscript is set on the scanner and the reading start button is touched according to the operation screen (S311), the manuscript is scanned and read so as to obtain the image data (S312).

After finishing the reading operation of the image data, the image display process is executed (S313). The image display process is same as that of FIG. 5, that is, according to the user selection, the privacy protection mode is set. Then, as shown in FIG. 38, the operation screen showing the image with the selected image and the frame synthesized appears so that the synthesized image adjustment (S314) and the setting of the number of prints (S315) can be executed. The adjustment of the image read by the scanner and the setting of the number of prints (S313 to S315) are same as the procedure S307 to S309 in the case of reading the image by the recording medium. In the case the privacy protection mode is set in the step S3313, the image shown on the left side of FIG. 38 is the one after applying the privacy protection process.

After setting the order content in the procedure S309 or S315, the output command is inputted similar to the case of the digital photo (S316) so as to execute the printing operation. Since the process thereafter is same as the steps S113 to S116 of FIG. 4, explanation is not given therefor.

### (3) Index printing

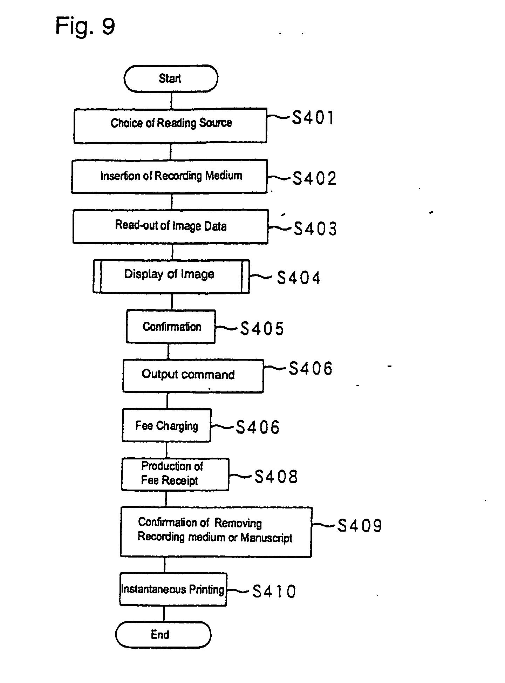

Next, the procedure in the case the "index printing" is selected will be explained. In the main menu screen, if the "index printing" position is touched by a hand, the "index printing" procedure shown in FIG. 9 is started. In each operation screen to be indicated after the start of the "index printing" procedure, in principle, a "cancel" button and a "return to the previous screen" button are provided so that it can return to the start screen by pressing the "cancel" button, and it can return to the operation screen of the previous step by pressing the "return to the previous screen" button so as to enable change of the operation.

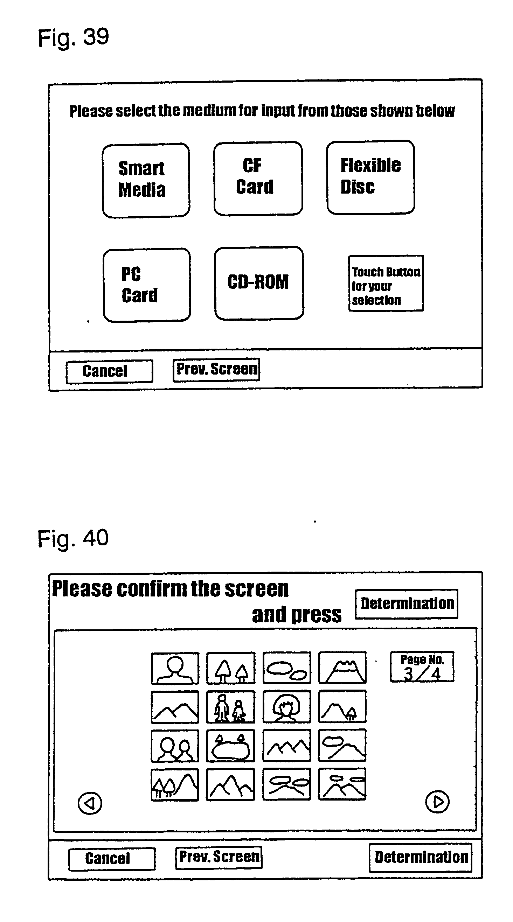

In the case the "index printing" procedure is started, as shown in FIG. 39, the operation screen with the image data reading sources shown is indicated so that a reading source can be selected (S401). In the operation screen at the time, the message "please select the medium for input from those shown below" is shown laterally in the uppermost row, and therebelow, the touch panel buttons each with the name of the smart medium, the CF card, the flexible disc, the PC card, and the CD-ROM are shown. In the operation screen, in the case a touch panel button is touched by a hand, the corresponding reading source is selected. In the "index printing" procedure, the image such as a photograph (scanner) cannot be selected as the reading source.

In the operation screen, in the case a touch panel button is touched by a hand, the corresponding reading source is selected so that the operation screen showing the inserting method for the selected recording medium (FIGS. 15 to 19) appears. According to the guidance on the operation screen, a recording medium is inserted in the predetermined insertion port (S402), and the reading start button of the touch panel is touched by a hand so that the insertion port with the recording medium inserted is closed by the shutter so as to start the reading operation of the image data (S403).

After finishing the reading operation, the image display process is executed (S404). The image display process is same as that of FIG. 5, that is, according to the user selection, the privacy protection function is set. Then, as shown in FIG. 40, the operation screen showing the image with all the read out images shown as the index appears (S404). In the case the privacy protection mode is set by the customer in the step 303, the image after the corresponding process is shown. In the operation screen at the time, the message "please confirm the screen and press the determination" is shown laterally in the uppermost row, and below the message, the index image is displayed. In the right upper margin of the index image, the number of the page is shown. In the right and left margins of the index image, the forward scroll button, and the backward scroll button are provided. In the lowermost row, the "determination" button is provided together with the "cancel" button and the "return to the previous screen" button.

In the case the number of frames of the images is large, the index is divided into a plurality of pages, with the number of the page of the index shown on the screen indicated. By touching the forward scroll button or the backward scroll button, it can move to another page. After confirming the index image of each page using the scroll buttons, by touching the confirmation button, the order content is set (S405).

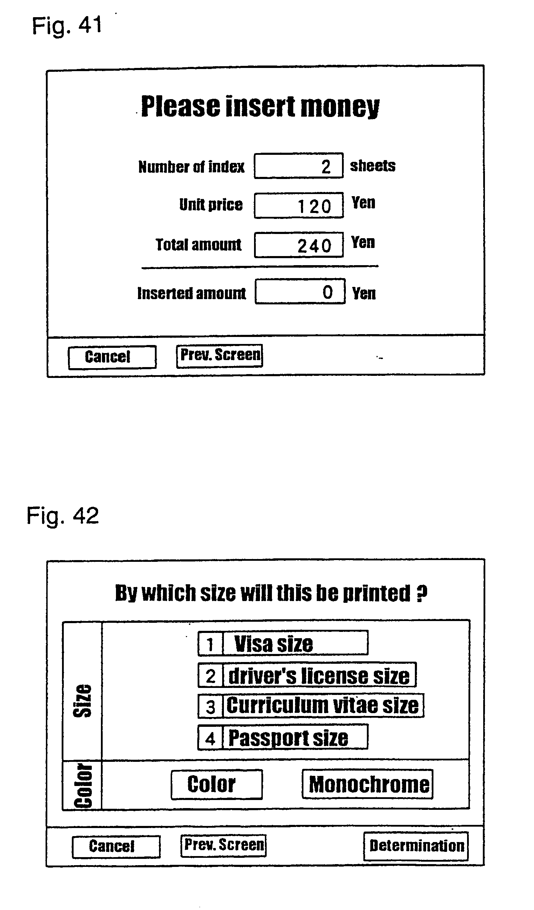

After setting the order content in the procedure S405, in the same manner as in the case of the digital photo, the output command is inputted (S406) so as to execute the printing operation. In the fee charging process of the steps S407 and S412, the guidance screen of FIG. 41 appears instead of the guidance screen of FIG. 25. In the case the fee is inserted, the payment confirmation screen corresponding to the guidance screen of FIG. 41 appears instead of the guidance screen of FIG. 26. In the guidance screen of the fee charging process in the index printing, the "number of indexes" is shown instead of the "number of order". In the index printing, all the pages of the index images shown in the screen in the step S404 are printed as a set. The number of indexes denotes the total number of pages of the index images. Therefore, the number of order in the digital photo can be changed according to the intention of the customer.

### (4) Seal

Next, the procedure in the case the "seal" is selected will be explained. In the main menu screen, by touching the "seal" position by a hand, the "seal" procedure starts so that a pre-cut seal divided into a plurality of small screens can be obtained. Since the procedure is same as the process shown in FIG. 4 except that the printing paper is a sealing paper, further explanation is not given.

### (5) Certification photograph

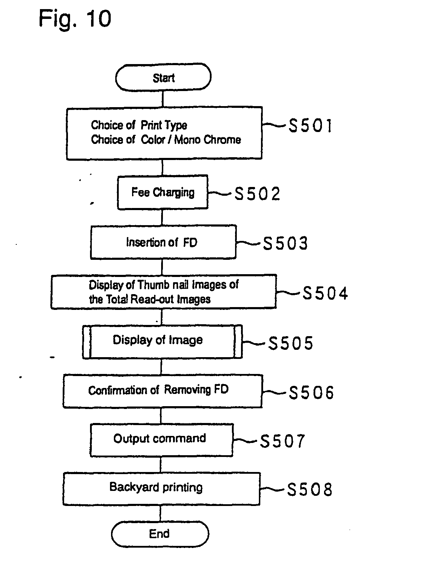

Next, the procedure in the case the "certification photograph" is selected will be explained. In the main menu screen, if the "certification photograph" position is touched by a hand, the "certification photograph" procedure shown in FIG. 10 is started. In each operation screen to be indicated after the start of the "certification photograph" procedure, in principle, a "cancel" button and a "return to the previous screen" button are provided so that it can return to the start screen by pressing the "cancel" button, and it can return to the operation screen of the previous step by pressing the "return to the previous screen" button so as to enable change of the operation.

In the case the "certification photograph" procedure starts, as shown in FIG. 42, the operation screen for selecting the printing type appears (S501). In the operation screen at the time, the message "by which size will this be printed" is shown laterally in the uppermost row, and therebelow, a size designation panel and a color designation panel are disposed in two rows. In the lowermost row, the "cancel" button, the "return to the previous screen" button, and the "determination" button are provided. In the size designation panel, touch panel buttons for the "visa size", the "driver's license size", the "curriculum vitae size", and the "passport size" are shown in the vertical direction. In the color designation panel, touch panel buttons for color and monochrome are provided in the lateral direction. In the case the determination button is touched after designating the size and the color by touching the touch panel buttons, the printing type can be set.

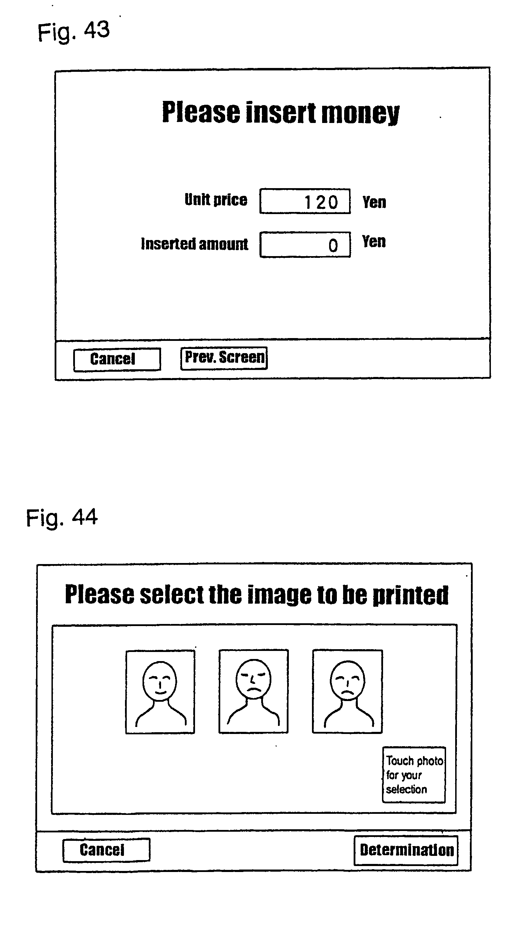

In the case the printing type is set, as shown in FIG. 43, the guidance screen for requesting the fee payment appears so as to execute the fee charging process (S502). In the guidance screen of the fee charging process in the certification photograph, the message "please insert money" is shown laterally in the uppermost row, and therebelow, the fee for one sheet (unit price), and the inserted amount are shown laterally in upper and lower two rows. In the lowermost row, the "cancel" button and the "return to the previous screen" button are provided. Although only one sheet of a certification photograph having one or a plurality of the same image is printed out for one order in this embodiment, it is also possible to set an optional number for printing out before charging. In the case the amount inserted in the coin insertion port and/or the bill insertion port according to the explanation on the guidance screen reaches or exceeds the total charged amount, the change is discharged from the change discharging port as needed so as to complete the fee charging process.

In the case the fee charging process is completed, the operation screen shown in FIG. 19 appears so that the flexible disc (FD) with the certification photograph image recorded is requested to be inserted in the reading device. In this embodiment, a photography space comprising a blank background is provided in the shop with the main body installed so that a clerk shoots the customer by a digital camera for production of the certification photograph, and hands to the customer the FD with the taken image data stored. Since process of the certification photograph image is not permitted, an image with the blank background, taken in a size appropriate for the certification photograph is handed to the customer. In contrast, the main body is set such that the image data can be read out only from the FD in the certification photograph procedure. It is also possible to enable reading the image data for the certification photograph from any recording medium by optionally setting the main body.

In the case the customer inserts the FD with the image for the certification photograph into the FD reading device of the main body according to the guidance of the operation screen (S503), as shown in FIG. 44, the operation screen with the thumb nail images of the certification photograph images stored in the flexible appears (S504). In the operation screen at the time, the message "please select the image to be printed" is shown laterally in the uppermost row, and therebelow, the thumb nail images of all the read out images are shown. In the right downward margin of the thumb nail image indication area, the message for explaining the image selection method "please touch a photograph for selection" is shown. In the lowermost row, the "cancel" button and the "determination" button are provided. By selecting only one image in the operation screen, touching the image, and touching the determination button, the image to be printed is set.

Next, the image display process same as that shown in FIG. 5 is executed (S505). Therefore, if the user desires, the selected image is displayed in the state with the privacy protection process applied.

When the image to be printed is set, the operation screen for taking out the FD appears. According to the guidance on the operation screen, the FD is removed (S506). After the FD is removed, the guidance screen for advising to the customer that the ordered certification photograph is provided for the backyard printing to be executed at another place appears . The backyard printing denotes that a printing process by a printer other than that of the image printing apparatus, but since it is not directly related with the present invention, detailed description is not given. In this embodiment, since the printing out operation of the certification photograph cannot be dealt with by the main body printer, the system is set such that the backyard printing is selected automatically to all the certification photograph orders.

It is preferable that cut marks are provided on the four corners of the image to each small screen of the certification photograph printed out according to the above-mentioned procedure so that the image portions can be cut by the size according to the purpose and application.

### (6) Postcard printing

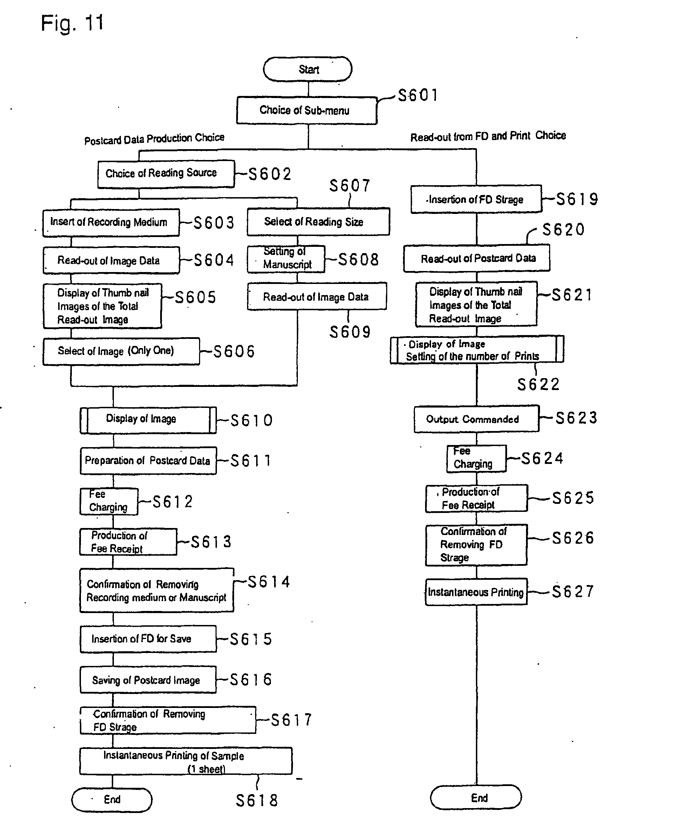

Next, the procedure in the case the "postcard printing" is selected will be explained. In the main menu screen, if the "postcard printing" position is touched by a hand, the "postcard printing" procedure shown in FIG. 11 is started. In each operation screen to be indicated after the start of the "postcard printing" procedure, in principle, a "cancel" button and a "return to the previous screen" button are provided so that it can return to the start screen by pressing the "cancel" button, and it can return to the operation screen of the previous step by pressing the "return to the previous screen" button so as to enable change of the operation.

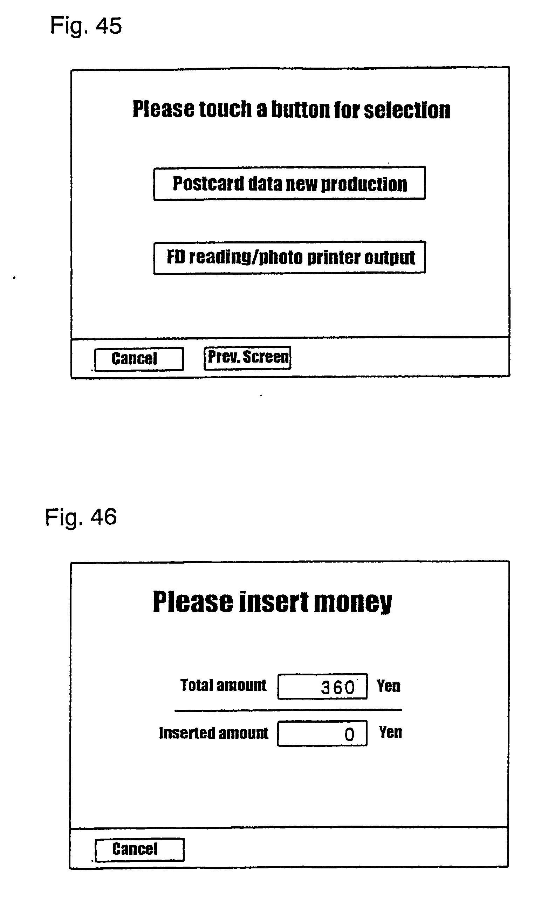

In the case the "postcard printing" procedure starts, the guidance screen for indicating the sub menu as shown in FIG. 45 appears so that the "postcard data new production" or the "FD reading/photo printer output" can be selected (S601). In the operation screen at the time, the message "please touch a button for selection" is shown laterally, and therebelow, the "postcard data new production" and the "FD reading/photo printer output" button are provided in the up and down rows. In the lowermost row, the "cancel" button and the "return to the previous screen" button are provided.

In the procedure of the postcard data new production, the image data such as a photograph are read out from a recording medium or a printed article, and processed so as to produce the postcard data and recorded in a flexible disc (FD). A sample is printed so as to be added to the stored FD. In contrast, in the procedure of the FD reading/photo printer output, the postcard data produced by the postcard data new production procedure can be read out from the FD so as to be printed out. In the sub menu screen, by touching a touch panel button of a procedure, the corresponding procedure is selected.

In the case the postcard data new production is selected, as shown in FIG. 14, the operation screen with the image data reading sources listed is shown. By touching a reading source button, the corresponding reading source is selected (S602). In the operation screen, in the case any of the smart medium, the CF card, the flexible disc, the PC card, and the CD-ROM is selected as the reading source, the operation screen showing the insertion method corresponding to the selected recording medium (FIGS. 15 to 19) is indicated. In the case a recording medium is inserted in a predetermined insertion port (S603) and the reading start button on the touch panel is touched by a hand according to the guidance of the operation screen, the insertion port with the recording medium inserted is closed by the shutter so as to start reading the image data (S604). When the reading operation is completed, the operation screen with the thumb nail images of all the read out images listed (not shown) appears (S605). By selecting only one image to be used for the postcard production from the listed thumb nail images, the image is selected (S606). The procedure S602 to S606 in the postcard data new production is same as the procedure S302 to S306 in the frame synthesis.

In contrast, in the case the photograph (scanner) is selected as the reading source (S602) in the operation screen (FIG. 14) for selecting the image data reading source, the operation screen (FIG. 21) for selecting the reading size appears so that the photograph size or the A5 size can be selected (S607). When the reading size is selected, the operation screen for reading the manuscript by the scanner (FIG. 22) appears. In the case the manuscript is set on the scanner according to the operation screen and the reading start button is touched (S608), the image data are read from the manuscript (S609). The procedure S602, S607 to S609 in the postcard data new production is same as the procedure S302, S310 to S312 in the frame synthesis.

Next, the image display process is executed (S610). The process is same as that shown in FIG. 5. Thereby, the image data can be shown on the image printing apparatus in the state with the privacy protection process applied. The image selected in S606 or read in S609 is displayed on the operation screen (not shown) so that the image can be processed and the postcard data can be produced in the operation screen (S611). When the postcard data production is finished, the guidance screen as shown in FIG. 46 appears so that the fee charging process is executed. In the case an amount as charged or more than that is inserted according to the guidance screen explanation, the change is discharged from the change discharging port as need, and the fee charging process is completed (S612). In the case the fee charging process is completed, the receipt is published so as to be discharged from the receipt ejection port (S613).

After publishing the receipt, the operation screen for removing the recording medium or the manuscript as the image data reading source (FIGS. 27 to 32) appears. Furthermore, in the case the recording medium is inserted in the reading device, the insertion port shutter is opened (S614). In the case the recording medium or the manuscript is taken out according to the operation screen explanation, the operation screen (not shown) for requesting the storage FD insertion appears . In this embodiment, only the produced postcard data can be stored in the FD, but it is also possible to set the main body optionally so that the postcard data can be stored in any recording medium. When the storage FD is inserted and the storage start button is touched (S615) according to the operation screen explanation, the postcard data are stored in the FD (S616). In the case the postcard data storage is completed, the operation screen (not shown) for removing the storage FD appears so that the storage FD can be taken out according to the operation screen explanation (S617). In the case the storage FD is removed, the guidance screen (not shown) for printing a sample appears so that only one sheet of the sample is printed instantaneously. After finishing the sample printing operation, the finish screen shown in FIG. 34 appears.

In the case the FD reading/photo printer output is selected in the postcard printing sub menu, the operation screen (not shown) for inserting the FD with the postcard data produced in the postcard data new production procedure stored appears (S619). When the storage FD is inserted in the reading device and the reading start button is touched according to the operation screen explanation, the postcard data are read (S620). The operation screen (not shown) with the thumb nail images of the read out postcard data listed appears. By selecting one or a plurality of the thumb nail images of the postcards to be printed out in this screen, and inputting the number of prints for each of the selected postcard data, the order content is set as well as the image display process is executed (S622). The image display process is same as that shown in FIG. 5 so that the image can be displayed in the privacy protection mode.

Next, the output command is executed so that the printing operation is executed (S623). Then, when the printing operation is completed, the finish screen shown in FIG. 34 appears. The procedure after printing is same as the case of the digital photo.

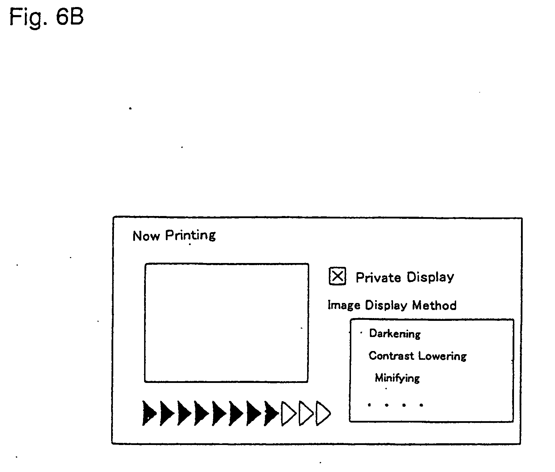

Although the privacy protection process is executed according to the command of the customer during the image display process in the above-mentioned embodiments, it is also possible to designate the privacy protection process during the image printing process as shown in FIG. 6B. Thereby, it is possible to execute the necessary process while viewing the original image until the printing command input, and execute the privacy protection process after starting the printing operation. Moreover, it is also possible to change the kind of the privacy protection process once started in the halfway because the privacy protection function of a processing method may not be sufficient depending on the image. Moreover, it is also possible that the image itself is not shown at all instead of indicating the image with the above-mentioned image process applied.

Furthermore, it is also possible that a method of having the privacy protection mode immediately and a method of having the privacy protection mode only during the printing operation are selected at the time of inquiring to the customer whether or not the privacy protection mode is used in the image display process shown in FIG. 5.

As heretofore explained, according to the image printing apparatus of the present invention, the privacy protection can be achieved by applying various image processes at the time of indicating the image to be printed on the display part of the image printing apparatus so that it can hardly be seen from the people around there.

Moreover, since the image process to be executed as the privacy protection process can be selected by the customer, the customer can select and execute the process that can be recognized easily for him or her.

## Claims

1. An image printing apparatus (1) comprising:
image data inputting means (4) for inputting image data;
a command inputting device (42) for inputting a printing command including designation of an image to be output;
printing means (11) for printing the image to be output;
a display device (14) for displaying an image; and the image printing apparatus being **characterized in that** the apparatus further comprises:
a processing device (31, 32) for producing a protection processed image for applying a privacy protection process to the image to be output,
controlling means (31,32) for causing the display device to display either the protection processed image or the non protection processed image to be output according to the designation of a user,
wherein the process comprises applying a privacy protection to the image to be output at the processing device, the privacy protection being applied apart from the printing command even if the printing command has designation of printing size to be output; and
displaying either one of the protection processed image and the non protection processed image to be output on the display device according to the designation of the user.

2. An image printing apparatus as claimed in Claim 1, wherein said image data inputting means (4) has one or a plurality of recording medium reading devices and/or optical image reading devices; and
said image printing apparatus (1) further comprising:
an output content designation data producing means (8) for producing the output content designation data (9) recording the image data to be output, protection processed, or original, and the accompanying conditions based on the original image data inputted from the image data inputting means and the order content inputted from the command inputting device.

3. An image printing apparatus as claimed in Claim 1 or Claim 2, wherein said controlling means (31, 32) is arranged to execute the selective display of the protection processed image and the non protection processed image to be output by the display device during the printing operation by the printing means (11).

4. An image printing apparatus as claimed in any preceding claim, wherein the processing device (31, 32) is arranged to apply at least one process selected from the group consisting of an image darkening process, a contrast lowering process, an image minifying process, a binary process of the image, an edge iris process, and an embossing process to the image to be output as the protection processed image.

5. An image printing apparatus as claimed in Claim 4, wherein the controlling means (31, 32) receives a designation from a user for applying any one process selected from the group consisting of an image darkening process, a contrast lowering process, an image minifying process, a binary process of the image, an edge iris process, and an embossing process as the privacy protection process, and produces the protection processed image according to the designated process.

## Patentansprüche

1. Bilddruckgerät (1), umfassend:
Mittel (4) zur Bilddateneingabe zum Eingeben von Bilddaten;
Vorrichtung (42) zur Befehlseingabe zum Eingeben eines Druckbefehls einschließlich der Angabe eines auszugebenden Bildes;
Druckmittel (11) zum Drucken des auszugebenden Bildes; Anzeigevorrichtung (14) zum Anzeigen eines Bildes; und
wobei das Bilddruckgerät **dadurch gekennzeichnet ist, dass** das Gerät weiterhin umfasst:
Bearbeitungsvorrichtung (31, 32) zum Herstellen eines Bildes, das zum Schutz der Privatsphäre bearbeitet wurde, um das auszugebende Bild einem Verfahren zum Schutz der Privatsphäre zu unterziehen;
Steuerungsmittel (31, 32), die bewirken, dass die Anzeigevorrichtung entweder das Bild, das zum Schutz der Privatsphäre bearbeitet wurde, anzeigt, oder dass das Bild, das nicht zum Schutz der Privatsphäre bearbeitet wurde, gemäß der Angabe des Benutzers ausgegeben wird, wobei der Vorgang umfasst:
das Anwenden des Schutzes der Privatsphäre auf das von der Bearbeitungsvorrichtung auszugebende Bild, wobei der Schutz der Privatsphäre abgesehen von dem Druckbefehl selbst dann zur Anwendung kommt, wenn die Angabe der auszugebenden Druckgröße durch den Druckbefehl erfolgt; und
das Anzeigen entweder des zum Schutz der Privatsphäre bearbeiteten Bildes oder des nicht zum Schutz der Privatsphäre bearbeiteten, nach Benutzerangabe auf der Anzeigevorrichtung auszugebenden Bildes.

2. Bilddruckgerät nach Anspruch 1, wobei das Mittel (4) zur Bilddateneingabe eine bzw. eine Vielzahl von Lesevorrichtungen eines Aufzeichnungsmediums und/oder optische Bildlesevorrichtungen aufweist; und das Bilddruckgerät (1) weiterhin umfasst:
Mittel (8) zum Erzeugen der Datenangabe über den Ausgabeinhalt zum Erzeugen der Datenangaben (9) über den Ausgabeinhalt, mit denen die auszugebenden Bilddaten - geschützt oder im Original - sowie die Begleitumstände aufgezeichnet werden, basierend auf den ursprünglichen, von dem Mittel zur Eingabe von Bilddaten eingegeben Bilddaten und der von der Vorrichtung zur Befehlseingabe eingegeben Auftragsinhalte.

3. Bilddruckgerät nach Anspruch 1 oder Anspruch 2, wobei die Steuerungsmittel (31, 32) angeordnet sind, um während des Druckvorgangs durch die Druckmittel (11) die selektive Anzeige des Bildes, das zum Schutz der Privatsphäre bearbeitet wurde, und des durch die Anzeigevorrichtung auszugebenden, nicht geschützten Bildes zu bewerkstelligen.

4. Bilddruckgerät nach einem der vorherigen Ansprüche, wobei die Bearbeitungsvorrichtung (31, 32) angeordnet ist, um zumindest einen Vorgang anzuwenden, der aus der Gruppe umfassend einen Vorgang zur Bildabdunkelung, einen Vorgang zur Kontrastverringerung, einen Vorgang zur Bildverkleinerung, einen Binärbildbearbeitungs-Vorgang, einen Irisrandbearbeitungs-Vorgang sowie einen Prägevorgang an dem Bild, das als datengeschütztes Bild, das zum Schutz der Privatsphäre bearbeitet wurde, auszugeben ist, ausgewählt ist.

5. Bilddruckgerät nach Anspruch 4, wobei die Steuerungsmittel (31, 32) eine Angabe durch einen Nutzer erhalten zum Anwenden eines beliebigen Vorgangs, der aus der Gruppe, umfassend einen Vorgang zur Bildabdunkelung, einen Vorgang zur Kontrastverringerung, einen Vorgang zur Bildverkleinerung, einen Binärbildbearbeitungs-Vorgang, einen Irisrandbearbeitungs-Vorgang sowie einen Prägevorgang an dem Bild ausgewählt ist, und das Bild herstellt, das nach dem ausgegebenen Vorgang zum Schutz der Privatsphäre bearbeitet wurde.

## Revendications

1. Appareil d'impression d'images (1) comprenant :
des moyens d'entrée de données d'images (4) destinés à entrer des données d'image,
un dispositif d'entrée de commande (42) destiné à entrer une commande d'impression comprenant la désignation d'une image devant être produite,
des moyens d'impression (11) destinés à imprimer l'image devant être produite,
un dispositif d'affichage (14) destiné à afficher une image,
appareil d'impression d'image **caractérisé en ce que** l'appareil comprend en outré :
un dispositif de traitement (31, 32) destiné à produire une image traitée en protection pour appliquer un procédé de protection de la confidentialité à l'image devant être produite,
des moyens de contrôle (31, 32) afin que le dispositif d'affichage affiche soit l'image traitée en protection soit l'image non traitée en protection devant être produite en fonction de la désignation d'un utilisateur,
dans lequel le procédé consiste à appliquer une protection de confidentialité à l'image devant être produite au niveau du dispositif de traitement, la protection de confidentialité étant appliquée indépendamment de la commande d'impression même si la commande d'impression a la désignation de la taille d'impression devant être produite et
afficher l'une ou l'autre de l'image traitée en protection et de l'image non traitée en protection devant être produite sur le dispositif d'affichage en fonction de la désignation de l'utilisateur.

2. Appareil d'impression d'images selon la revendication 1, dans lequel lesdits moyens d'entrée de données d'image (4) ont un ou une pluralité de dispositifs de lecture de supports d'enregistrement et/ou de dispositifs de lecture d'image optiques,
ledit appareil d'impression d'image (1) comprenant en outre :
des moyens de production de données de désignation de contenu de sortie (8) destinés à produire des données de désignation de contenu de sortie (9) enregistrant les données d'image devant être produites, traitées en protection, ou originales, et les conditions jointes en se basant sur les données d'image originales entrées à partir des moyens d'entrée de données d'image et sur le contenu de commande entré à partir du dispositif d'entrée de commande.

3. Appareil d'impression d'images selon la revendication 1 ou la revendication 2, dans lequel lesdits moyens de contrôle (31, 32) sont conçus pour exécuter l'affichage sélectif de l'image traitée en protection et de l'image non traitée en protection devant être produite par le dispositif d'affichage au cours de l'opération d'impression par les moyens d'impression (11).

4. Appareil d'impression d'images selon l'une quelconque des revendications précédentes, dans lequel le dispositif de traitement (31, 32) est conçu pour appliquer au moins un procédé choisi dans le groupe comprenant un procédé d'obscurcissement de l'image, un procédé de réduction du contraste, un procédé de miniaturisation d'image, un procédé binaire de l'image, un procédé iris de bordure et un procédé de bosselage à l'image devant être produite en tant qu'image traitée en protection.

5. Appareil d'impression d'images selon la revendication 4, dans lequel les moyens de contrôle (31, 32) reçoivent une désignation d'un utilisateur pour appliquer l'un quelconque des procédés choisis dans le groupe comprenant un procédé d'obscurcissement de l'image, un procédé de réduction du contraste, un procédé de miniaturisation de l'image, un procédé binaire de l'image, un procédé iris de bordure et un procédé de bosselage comme procédé de protection de confidentialité, et produisent l'image traitée en protection selon le procédé désigné.
